# FASCICULE DE BREVET EUROPEEN

(11) **EP 3 947 127 B1**
(45) Date de publication et mention de la délivrance du brevet: **18.09.2024**
(21) Numéro de dépôt: 20712367.0
(22) Date de dépôt: 24.03.2020
(51) Int. Cl.: B62K 3/00, B62K 15/00

(54) **TROTTINETTE PLIABLE**
FALTBARER TRETROLLER
FOLDABLE SCOOTER

(30) Priorité: 28.03.2019 FR 1903270
(43) Date de publication de la demande: 09.02.2022
(73) Titulaire: Alligator International Design SL, 08021 Barcelona (ES)
(72) Inventeur: VANEY, Laurent Julien Michel, BARCELONE 08021 (ES); BATLLE BESORA, Genis, BARCELONE 08021 (ES)
(74) Mandataire: Germain Maureau
(86) Numéro de dépôt international: PCT/EP2020/058236
(87) Numéro de publication internationale: WO 2020/193586

(56) Documents cités:
- DE-U1- 202018 005 767
- DE-U1- 202018 005 767
- DE-U1- 29 612 276
- DE-U1- 29 612 276

## Description

### [DOMAINE DE L'INVENTION]

L'invention se rapporte à une trottinette, et plus spécifiquement à une trottinette pliable comprenant un châssis muni d'un marchepied et supportant une roue arrière rotative autour d'un axe transversal, et une colonne de direction équipée d'une roue avant et montée pivotante sur le châssis.

L'invention trouve une application favorite, et non limitative, pour une trottinette motorisée, et notamment une trottinette électrique, c'est-à-dire une trottinette motorisée avec un moteur électrique. L'invention est cependant envisageable avec une trottinette non motorisée.

### [ETAT DE L'ART]

De manière connue, le châssis d'une trottinette pliable comprend une première partie supportant la roue arrière et un marchepied, et une seconde partie supportant en pivot la colonne de direction, où la première partie et la seconde partie du châssis sont reliées l'une à l'autre par une articulation pivotante selon un axe de pliage permettant une mobilité de l'une par rapport à l'autre entre
- une configuration dépliée dans laquelle la colonne de direction saille vers le haut vis-à-vis du marchepied pour un usage lors d'un déplacement, la colonne de direction s'étendant dans un plan médian orthogonal à l'axe transversal et qui inclut un axe longitudinal passant par la roue avant et par la roue arrière et parallèle à une direction d'avancée de la trottinette lorsque celle-ci avance en ligne droite ; et
- une configuration repliée dans laquelle la colonne de direction est rabattue le long du marchepied.

Dans une première réalisation, connue notamment des documents FR3070155, FR3041321 et FR3050170, l'axe de pliage est parallèle à l'axe transversal pour une mobilité de la colonne de direction de la configuration dépliée vers la configuration repliée dans laquelle la colonne de direction reste dans le plan médian et s'étend au-dessus du marchepied et de la roue arrière. En configuration pliée, la trottinette est globalement symétrique vis-à-vis du plan médian et présente un encombrement vertical qui tient de l'empilement dans le plan médian de la colonne de direction et du marchepied.

Dans une seconde réalisation, connue notamment du document FR3042467, l'axe de pliage est contenu dans le plan médian et est incliné par rapport à l'axe longitudinal, pour une mobilité de la colonne de direction de la configuration dépliée vers la configuration repliée dans laquelle la colonne de direction reste dans le plan médian et s'étend en-dessous du marchepied et de la roue arrière. En configuration pliée, la trottinette est globalement symétrique vis-à-vis du plan médian et présente un encombrement vertical qui tient de l'empilement dans le plan médian de la colonne de direction et du marchepied.

L'état de la technique peut également être illustré par l'enseignement du document DE 20 2018 005767 U1, qui montre le préambule de la revendication 1, divulgue une trottinette pliable qui comporte un châssis comprenant, d'une part, une première partie supportant la roue arrière et un marchepied et, d'autre part, une seconde partie supportant en pivot la colonne de direction qui porte la roue avant. Cette première partie et cette seconde partie du châssis sont reliées l'une à l'autre par une articulation pivotante selon un axe de rotation qui est inclus dans le plan médian et qui est incliné vers le bas, et cette articulation pivotante relie la première partie et la seconde partie par deux surfaces de contact obliques (non horizontales) et traversées par cet axe de rotation. Ainsi, en partant de la configuration dépliée, la seconde partie pivote autour de cet axe de pivotement de 180 degrés, et ainsi, dans la configuration repliée, la colonne de direction est passée sous le marchepied, et se trouve dans le plan médian, avec les mêmes inconvénients que précités, à savoir un encombrement vertical qui tient de l'empilement dans le plan médian de la colonne de direction et du marchepied.

### [DESCRIPTION GENERALE DE L'INVENTION]

La présente invention vise à résoudre en tout ou partie les inconvénients précités, en proposant une trottinette pliable qui, en configuration pliée, présente un encombrement vertical réduit.

Un autre but de l'invention est de proposer une trottinette pliable avec une articulation pivotante relativement effacée pour que la trottinette pliable conserve une ligne élégante.

Un autre but de l'invention est de proposer une trottinette pliable pratique et peu gênante en situation de portage manuel.

A cette fin, l'invention propose une trottinette, de type trottinette pliable, comprenant un châssis et une colonne de direction équipée d'une roue avant et montée pivotante sur le châssis selon un axe de direction, ce châssis comprenant, d'une part, une première partie supportant une roue arrière rotative autour d'un axe transversal et un marchepied et, d'autre part, une seconde partie supportant en pivot la colonne de direction, dans laquelle la trottinette présente un plan médian orthogonal à l'axe transversal et délimitant un premier côté latéral et un second côté latéral opposés, ce plan médian incluant un axe longitudinal passant par la roue avant et par la roue arrière et parallèle à une direction d'avancée de la trottinette lorsque celle-ci avance en ligne droite, et la roue arrière présente une première face latérale sur ledit premier côté latéral et une seconde face latérale, opposée à la première face latérale, sur ledit second côté latéral,
et dans laquelle la première partie et la seconde partie du châssis sont reliées l'une à l'autre par une articulation pivotante selon un axe de pliage permettant une mobilité de l'une par rapport à l'autre entre :
   - une configuration dépliée dans laquelle la colonne de direction saille vers le haut vis-à-vis du marchepied pour un usage lors d'un déplacement, ladite colonne de direction s'étendant dans le plan médian ; et
   - une configuration repliée dans laquelle la colonne de direction est rabattue le long du marchepied ;
une telle trottinette étant remarquable en ce que l'articulation pivotante est agencée pour une mobilité de la colonne de direction de la configuration dépliée vers la configuration repliée dans laquelle la colonne de direction est rabattue sur le premier côté latéral vis-à-vis du plan médian et s'étend à distance dudit plan médian, au moins partiellement en-dessous du marchepied, le long d'un premier rebord latéral du marchepied situé sur ledit premier côté latéral et en regard de la première face latérale de la roue arrière.

Ainsi, l'invention propose d'amener en configuration repliée la colonne de direction sur la droite (ou inversement sur la gauche) du marchepied et de la roue arrière, de manière asymétrique vis-à-vis du plan médian et non plus, comme dans l'art antérieur, en laissant la colonne de direction dans le plan médian une fois repliée. Ainsi, dans la configuration repliée, l'encombrement vertical est réduit car il n'y pas d'empilement dans le plan médian de la colonne de direction et du marchepied. Une telle configuration permet en outre un portage manuel aisé de la trottinette ainsi repliée.

Selon l'invention, l'axe de pliage est décalé sur le premier côté latéral vis-à-vis du plan médian et il s'étend de manière inclinée par rapport à l'axe longitudinal selon un angle d'inclinaison compris entre 20 et 60 degrés.

Un tel positionnement et une telle inclinaison de l'axe de pliage permet d'avoir le basculement recherché de la colonne de direction sur la droite (ou inversement sur la gauche) du marchepied et de la roue arrière.

Avantageusement, l'angle d'inclinaison est compris entre 30 et 50 degrés.

Dans un mode de réalisation particulier, l'axe de pliage s'étend parallèlement au plan médian.

Dans un mode de réalisation particulier :
- dans la configuration dépliée, l'axe de direction est vertical ou incliné par rapport à la verticale d'un angle compris entre 0 et 20 degrés ; et
- dans la configuration repliée, l'axe de direction est horizontal ou incliné par rapport à l'horizontale d'un angle compris entre 0 et 20 degrés.

Au sens de l'invention, la notion de « vertical(e) » fait référence à une direction verticale par rapport à un sol horizontal sur lequel la trottinette est en appui ou en roulement avec sa roue avant et sa roue arrière, et la notion de « horizontal(e) » fait référence à un plan horizontal parallèle au sol horizontal sur lequel la trottinette est en appui ou en roulement avec sa roue avant et sa roue arrière. Il est à noter que l'axe longitudinal de la trottinette est horizontale car parallèle à ce plan horizontal.

Avantageusement, dans la configuration repliée, l'axe de direction est parallèle, à plus ou moins 5 degrés, à l'axe longitudinal.

Ainsi, en configuration repliée, la colonne de direction et le marchepied s'étendent parallèlement, l'un à côté de l'autre, la colonne de direction étant en-dessous du marchepied, ce qui représente une configuration particulièrement pratique pour un portage manuel de la trottinette.

Dans une réalisation avantageuse, l'articulation pivotante se présente sous la forme d'une charnière pourvue d'un premier charnon solidaire d'un tronçon supérieur de la première partie du châssis et d'un second charnon solidaire d'un tronçon inférieur de la seconde partie du châssis, où le premier charnon et le second charnon sont articulés l'un par rapport à l'autre au moyen d'un pivot définissant l'axe de pliage, de sorte que cette articulation pivotante est mobile en pivotement entre :
- une position fermée correspondant à la configuration dépliée de la trottinette, dans laquelle le tronçon supérieur de la première partie du châssis et le tronçon inférieur de la seconde partie du châssis sont en alignement le long d'un axe secondaire contenu dans le plan médian ; et
- une position ouverte correspondant à la configuration repliée de la trottinette, dans laquelle le tronçon supérieur de la première partie du châssis et le tronçon inférieur de la seconde partie du châssis sont désalignées et sont disposés côte-à-côte suite au pivotement autour de l'axe de pliage.

Selon une possibilité, l'axe secondaire est incliné par rapport à l'axe longitudinal d'un angle secondaire compris entre 45 et 90 degrés, et notamment entre 50 et 80 degrés.

Selon une autre possibilité, l'axe de pliage est incliné par rapport à l'axe secondaire d'un angle intermédiaire qui est compris entre 90 et 120 degrés.

De manière avantageuse, l'axe de pliage est incliné par rapport à l'axe secondaire d'un angle intermédiaire égal à 90 degrés, ce qui permet que le tronçon supérieur de la première partie du châssis et le tronçon inférieur de la seconde partie du châssis sont parallèles dans la configuration dépliée.

Dans un mode de réalisation particulier, la première partie présente deux sections tubulaires successives :
- une section centrale sur laquelle est fixée le marchepied et qui s'étend selon l'axe longitudinal ; et
- une section inclinée qui saille de la section centrale et qui s'étend selon l'axe secondaire.

Dans une première réalisation, la section centrale présente une extrémité avant qui se prolonge par un coude, ce coude étant lui-même prolongé par la section inclinée.

Dans une seconde réalisation, la première partie comprend en outre :
- une section avant fixée sur une extrémité avant de la section centrale, à l'avant et à distance d'une jonction entre la section inclinée et la section centrale, et
- une section de renfort s'étendant entre la section avant et le tronçon supérieur de la première partie, cette section de renfort s'étendant entre l'axe secondaire et l'axe longitudinal pour former une structure de renfort à géométrie triangulaire inversée.

Dans cette seconde réalisation, le châssis a une structure renforcée à l'avant, avec la section de renfort qui va former une géométrie triangulaire inversée très appropriée pour la répartition des efforts.

Dans une réalisation particulière, l'articulation pivotante intègre un mécanisme de verrouillage propre à verrouiller l'articulation pivotante dans la configuration dépliée.

Selon une possibilité, le mécanisme de verrouillage comprend :
- un élément de verrouillage mobile rattaché à l'un du premier charnon et du second charnon ;
- un élément de verrouillage complémentaire rattaché à l'autre du premier charnon et du second charnon, cet élément de verrouillage mobile et cet élément de verrouillage complémentaire étant aptes à coopérer ensemble dans une position de verrouillage pour verrouiller l'articulation pivotante dans la position fermée, depuis une position de déverrouillage dans laquelle ledit élément de verrouillage mobile et ledit élément de verrouillage statique ne coopèrent pas ensemble pour autoriser une mobilité vers la position ouverte ; et
- un actionneur manuel conformé pour agir sur ledit élément de verrouillage mobile pour amener et bloquer ledit élément de verrouillage mobile dans la position de verrouillage.

Avantageusement, le mécanisme de verrouillage comprend un organe de rappel élastique sollicitant l'élément de verrouillage mobile vers la position de déverrouillage.

Selon une autre possibilité, l'élément de verrouillage mobile comprend un crochet et l'élément de verrouillage complémentaire est formé d'un élément complémentaire apte à être crocheté par ce crochet en position de verrouillage.

Selon une autre possibilité, l'actionneur manuel comprend une tige filetée pourvue d'une tête de préhension et d'une extrémité libre adaptée pour venir en butée contre l'élément de verrouillage mobile, cet actionneur manuel étant déplaçable par vissage pour agir sur l'élément de verrouillage mobile.

Selon une autre possibilité, le premier charnon comprend une première bride de serrage enserrant l'tronçon supérieur de la première partie du châssis, et le second charnon comprend une seconde bride de serrage enserrant l'tronçon inférieur de la seconde partie du châssis.

Selon une variante, l'élément de verrouillage mobile est monté sur l'une de la première bride de serrage et de la seconde bride de serrage, et l'élément de verrouillage statique est monté sur l'autre de la première bride de serrage et de la seconde bride de serrage, et l'actionneur manuel est monté comme l'élément de verrouillage statique sur l'autre de la première bride de serrage et de la seconde bride de serrage.

Selon une variante, l'élément de verrouillage mobile est monté à l'intérieur de l'une de la première bride de serrage et de la seconde bride de serrage, et l'élément de verrouillage statique est monté à l'intérieur de l'autre de la première bride de serrage et de la seconde bride de serrage.

Dans une réalisation particulière, l'élément de verrouillage mobile est monté sur une tige fixée à l'intérieur de l'une de la première bride de serrage et de la seconde bride de serrage, et l'élément de verrouillage statique est formé d'une tige fixée à l'intérieur de l'autre de la première bride de serrage et de la seconde bride de serrage.

De manière avantageuse, les tiges traversent la première bride de serrage et la seconde bride de serrage et traversent également le tronçon supérieur de la première partie du châssis et le tronçon inférieur de la seconde partie du châssis.

Ainsi, ces tiges contribuent à la rigidité de l'ensemble, en venant compléter le serrage des brides autour du tronçon supérieur de la première partie du châssis et du tronçon inférieur de la seconde partie du châssis.

Dans une variante, le premier charnon comprend une première douille prévue pour être fixée à l'intérieur du tronçon supérieur de la première partie du châssis, et le second charnon comprend une seconde douille prévue être fixée à l'intérieur du tronçon inférieur de la seconde partie.

Dans une autre variante, le premier charnon présente une face supérieure dans laquelle sont ménagées au moins deux trous de centrage, et le second élément présente une face inférieure de laquelle font saillie au moins deux plots de centrage, avantageusement de forme conique, où dans la position fermée de l'articulation pivotante, les plots de centrage s'engagent à l'intérieur des trous de centrage respectifs, qui sont de formes complémentaires de celles des plots de centrage.

Dans une autre variante, le premier charnon présente une première lèvre de verrouillage, par exemple de forme biseautée, et qui est diamétralement opposée au pivot, et le second charnon présente une seconde lèvre de verrouillage, par exemple de forme biseautée, et où en position fermée, ces deux lèvres de verrouillage sont plaquées l'une contre l'autre.

Dans une autre variante, le mécanisme de verrouillage comprend l'élément de verrouillage mobile qui présente une gorge qui est de forme complémentaire aux deux lèvres de verrouillage lorsque plaquées l'une contre l'autre en position fermée, et ainsi, dans la position fermée et dans la position de verrouillage, l'élément de verrouillage mobile enchâsse les deux lèvres de verrouillage à l'intérieur de sa gorge et verrouille ainsi l'articulation pivotante en position fermée.

Dans une autre variante, l'actionneur manuel comprend une tige filetée vissée dans un manchon taraudé intégré au premier charnon, et le second charnon présente une rainure afin de recevoir le manchon taraudé dans la position fermée.

Avantageusement, la colonne de direction présente une extrémité supérieure solidaire d'un guidon s'étendant transversalement et muni de deux poignées respectivement à droit et à gauche et, dans la configuration repliée, la roue arrière et les deux poignées présentent respectivement trois points d'appui s'étendant dans un même plan autorisant un appui de la trottinette debout sur ces trois points d'appui reposant sur un sol horizontal.

Grâce au pliage de la colonne de direction sur un côté latéral, il est ainsi possible de prévoir trois points d'appui (un point d'appui sur la roue arrière et deux points d'appui à droit et à gauche sur les poignées respectives) pour faire tenir debout la trottinette sur un sol horizontal, avec la colonne de direction et le marchepied qui sont substantiellement à la verticale et avec la roue avant au sommet. Cette conformation est particulièrement avantageuse pour un entreposage de la trottinette peu encombrant au sol.

Par ailleurs, dans une réalisation avantageuse, dans la configuration repliée, le guidon est incliné dans un sens par rapport à un plan de base qui est orthogonal à l'axe transversal, et la roue avant est inclinée dans un sens opposé par rapport à ce même plan de base.

Ces inclinaisons opposées du guidon et de la roue avant vis-à-vis de ce plan de base contribuent à un encombrement latéral réduit, avantageux lors d'un portage manuel au niveau de la colonne de direction, avec le plan de base substantiellement à l'horizontal.

L'invention concerne aussi la caractéristique selon laquelle la roue arrière est portée par un arbre transversal arrière s'étendant selon l'axe transversal, et cet arbre transversal arrière est supporté par une structure arrière fixée au châssis et s'étendant latéralement sur le second côté latéral vis-à-vis du plan médian, et ainsi en regard de la seconde face latérale de la roue arrière, opposée à la première face latérale, de sorte que l'arbre transversal arrière dépasse de la structure arrière pour supporter en porte-à-faux la roue arrière, et que la première face latérale de la roue arrière est dégagée.

Ainsi, la première face latérale de la roue arrière est dégagée, ce qui autorise d'amener la colonne de direction, lors du repliage, au plus près de cette première face latérale de la roue arrière, pour un encombrement latéral réduit. Par ailleurs, cette caractéristique permet de libérer le premier côté latéral de la roue arrière (en l'occurrence le côté latéral opposé à la structure arrière) ce qui autorise un accès libre à la roue arrière, notamment pour l'extraire de manière facile et rapide afin de faciliter les tâches de maintenance et de réparation dans un environnement quotidien.

Dans une réalisation particulière, la trottinette est motorisée en comprenant un moteur équipé d'un arbre moteur entraîné en rotation selon un axe moteur et accouplé à la roue arrière pour l'entraîner en rotation par l'intermédiaire d'un système de transmission.

Dans une réalisation avantageuse, le système de transmission comprend :
- l'arbre transversal arrière présentant deux portions d'extrémité opposées, respectivement une première portion d'extrémité et une seconde portion d'extrémité, la roue arrière étant accouplée en rotation sur la seconde portion d'extrémité de l'arbre transversal arrière ;
- un système à engrenage comprenant une couronne dentée en engrènement avec un pignon denté, cette couronne dentée étant accouplée en rotation sur la première portion d'extrémité de l'arbre transversal arrière, et ce pignon denté étant accouplé en rotation à l'arbre moteur, de sorte qu'une rotation de l'arbre moteur est convertible par le système à engrenage en une rotation de l'arbre transversal arrière et de la roue arrière autour de l'axe transversal ;
- la structure arrière fixée au châssis et supportant au moins le pignon denté et la première portion d'extrémité de l'arbre transversal arrière, cette structure arrière s'étendant latéralement sur le seul second côté latéral vis-à-vis du plan médian de sorte que la seconde portion d'extrémité de l'arbre transversal arrière dépasse de la structure arrière pour supporter en porte-à-faux la roue arrière.

Ainsi, dans cette réalisation avantageuse, il est proposé d'utiliser un système à engrenage permettant d'adapter les conditions de vitesse et de couple qu'apporte le moteur en une seule étape de démultiplication, et donc permettant aussi de se passer de composants dont l'entretien est élevée comme les chaînes et les courroies, tout en permettant de libérer totalement la première face latérale de la roue arrière, ce qui autorise un accès libre à la roue arrière sur le premier côté latéral (droit ou gauche), et ce qui permet aussi d'amener la colonne de direction, lors du repliage, au plus près de cette première face latérale, ce qui procure un encombrement latéral réduit.

### [BREVE DESCRIPTION DES DESSINS]

D'autres caractéristiques et avantages de la présente invention apparaîtront à la lecture de la description détaillée ci-après, de deux exemples de mise en oeuvre non limitatifs, faite en référence aux figures annexées dans lesquelles :
[Fig.1] est une vue schématique en perspective avant d'une première trottinette, selon un premier mode de réalisation de l'invention, en configuration dépliée ;
[Fig.2] est une vue schématique de côté, en l'occurrence du côté droit, de la première trottinette de la figure 1 (non intégralement représentée) ;
[Fig.3] est une vue schématique en perspective arrière de la première trottinette des figures 1 et 2 (non intégralement représentée) ;
[Fig.4] est une vue schématique une vue schématique de face de la première trottinette des figures 1 à 3 (non intégralement représentée) ;
[Fig.5] est une vue schématique en perspective avant de la première trottinette des figures 1 à 4, en configuration repliée ;
[Fig.6] est une vue schématique de dessous de la première trottinette des figures 1 à 5, en configuration repliée ;
[Fig.7] est une vue schématique en perspective de l'articulation pivotante de la première trottinette, en position ouverte ;
[Fig.8] est une vue schématique en perspective de l'articulation pivotante de la première trottinette, en position fermée ;
[Fig.9] est une vue schématique de côté de l'articulation pivotante de la première trottinette, en position fermée ;
[Fig.10] est une vue schématique de l'articulation pivotante de la première trottinette, en position fermée selon le plan de coupe X-X de la Figure 9 ;
[Fig.11] est une vue schématique de dessus de l'articulation pivotante de la première trottinette, en position fermée ;
[Fig.12] est une vue schématique en perspective de la première trottinette des figures 1 à 6, en configuration repliée et en situation d'appui debout sur trois points d'appui ;
[Fig.13] est une vue schématique de dessus de la première trottinette des figures 1 à 6, en configuration repliée ;
[Fig.14] est une vue schématique arrière de la première trottinette des figures 1 à 6, en configuration repliée et en situation de portage ;
[Fig.15] est une vue schématique en perspective avant d'une seconde trottinette, selon un second mode de réalisation de l'invention, en configuration dépliée ;
[Fig.16] est une vue schématique de côté, en l'occurrence du côté droit, de la seconde trottinette de la figure 15 ;
[Fig.17] est une vue schématique en perspective avant de la seconde trottinette des figures 15 et 16, en configuration repliée, avec un zoom sur l'articulation pivotante ;
[Fig.18] est une vue schématique de dessus de la seconde trottinette des figures 15 à 17, en configuration repliée ;
[Fig.19] est une vue schématique avant de la seconde trottinette des figures 15 à 18, en configuration repliée et en situation de portage, avec un zoom sur l'articulation pivotante ;
[Fig.20] est une vue schématique de côté, en l'occurrence du côté droit, de la seconde trottinette des figures 15 à 19, en configuration repliée ;
[Fig.21] est une vue schématique en perspective de l'articulation pivotante de la seconde trottinette, en position ouverte ; et
[Fig.22] est une vue schématique de côté de l'articulation pivotante de la seconde trottinette, en position ouverte.

### [DESCRIPTION DETAILLEE]

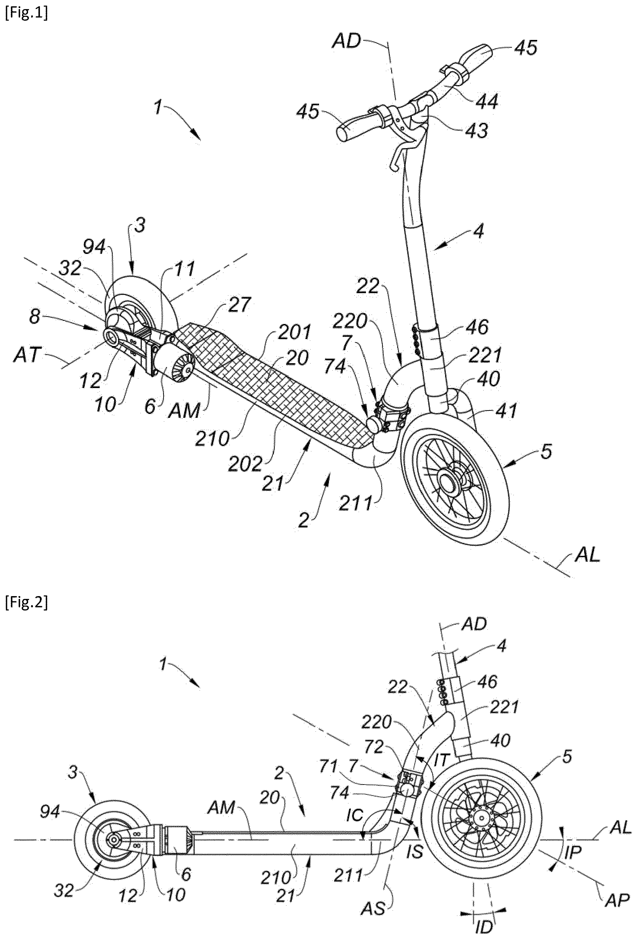

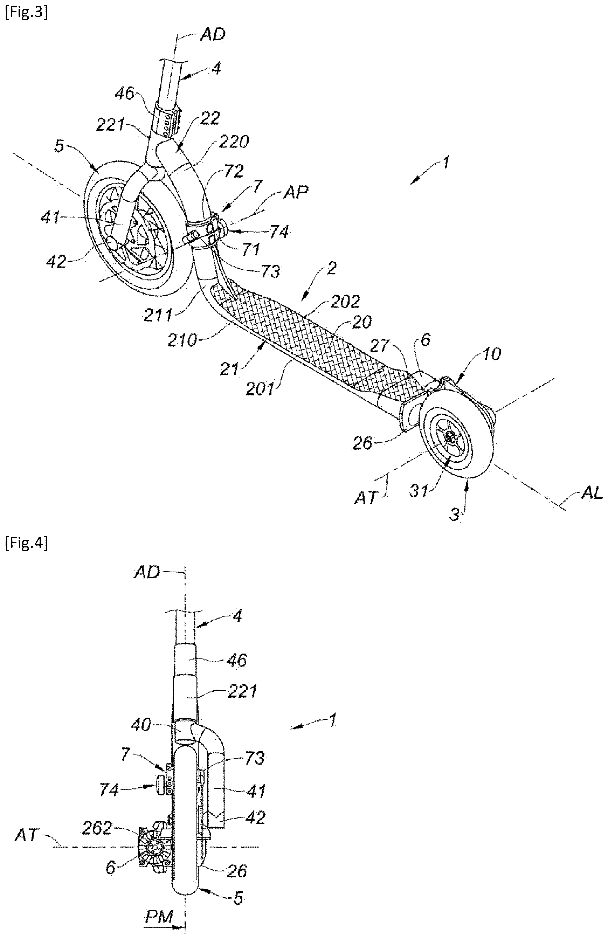

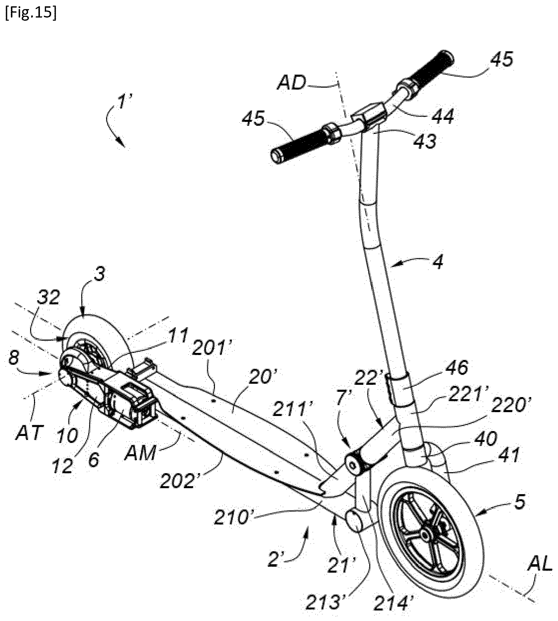

La suite de la description porte sur une première trottinette 1 et sur une seconde trottinette 1', qui sont respectivement conformes à un premier mode de réalisation de l'invention et à un second mode de réalisation de l'invention. Les figures 1 à 14 se rapportent à la première trottinette 1 et les figures 15 à 22 se rapportent à la seconde trottinette 1'. La première trottinette 1 et la seconde trottinette 1' pourront aussi être désignées respectivement par la trottinette 1 et la trottinette 1'.

Pour la suite de la description, les mêmes références numériques seront employées pour désigner des pièces et éléments structurels qui sont identiques ou similaires entre la première trottinette 1 et la seconde trottinette 1'. Des références numériques distinctes seront par contre employées pour désigner des pièces et éléments structurels qui sont distincts structurellement (mais pas nécessairement fonctionnellement) entre la première trottinette 1 et la seconde trottinette 1'. En l'occurrence, la première trottinette 1 et la seconde trottinette 1' se distingueront par leurs châssis 2, respectivement 2', et leurs articulations pivotantes 7, respectivement 7', décrits ci-après.

En référence aux figures 1 à 6 et 15 à 20, la première trottinette 1 et la seconde trottinette 1' forment chacune une trottinette pliable.

La trottinette 1 (respectivement 1') est une trottinette à deux roues, comprenant :
- un châssis 2 (respectivement 2') muni d'un marchepied 20 (respectivement 20') et supportant une roue arrière 3 rotative selon un axe transversal AT,
- une colonne de direction 4 équipée d'une roue avant 5, cette colonne de direction 4 étant montée pivotante sur le châssis 2 (respectivement 2').

La trottinette 1 (respectivement 1') présente un plan médian PM orthogonal à l'axe transversal AT et délimitant deux côtés latéraux opposés droit et gauche, à savoir un premier côté latéral (dans la suite de la description il s'agira du côté gauche) et un second côté latéral (dans la suite de la description il s'agira du côté droit). Ce plan médian PM inclut également un axe longitudinal AL de la trottinette 1, un tel axe longitudinal AL passant par la roue avant 5 et par la roue arrière 3 en étant parallèle à une direction d'avancée de la trottinette 1 (respectivement 1') lorsque celle-ci avance en ligne droite. Cet axe longitudinal AL est ainsi orthogonal à l'axe transversal AT. Le plan médian PM forme un plan de symétrie pour le marchepied 20 (respectivement 20') et les deux roues 3, 5

Le châssis 2 (respectivement 20') comprend une structure tubulaire qui peut, sans que cela soit limitatif, être en matériau métallique, et ce châssis 2 (respectivement 2') présente deux parties 21, 22 (respectivement 21', 22'), respectivement :
- une première partie 21 (respectivement 21') qui supporte la roue arrière 3 et le marchepied 20 (respectivement 20') ; et
- une seconde partie 22 (respectivement 22'), prolongeant la première partie 21 (respectivement 21'), et qui supporte en pivot la colonne de direction 4.

La suite de la description porte sur le pliage de la trottinette 1 (respectivement 1').

Pour que la trottinette 1 (respectivement 1') soit pliable, la première partie 21 (respectivement 21') et la seconde partie 22 (respectivement 22') du châssis sont reliées l'une à l'autre par une articulation pivotante 7 (respectivement 7') selon un axe de pliage AP (respectivement AP') qui autorise un pliage et un dépliage de la trottinette 1 (respectivement 1') selon cet axe de pliage AP (respectivement AP'), cette trottinette 1 (respectivement 1') formant alors une trottinette pliable..

Ainsi, le pivotement de la seconde partie 22 (respectivement 22') vis-à-vis de la première partie 21 (respectivement 21') se traduit par un basculement (ou un pivotement) de la colonne de direction 4 pour un pliage/dépliage de la trottinette 1 (respectivement 1').

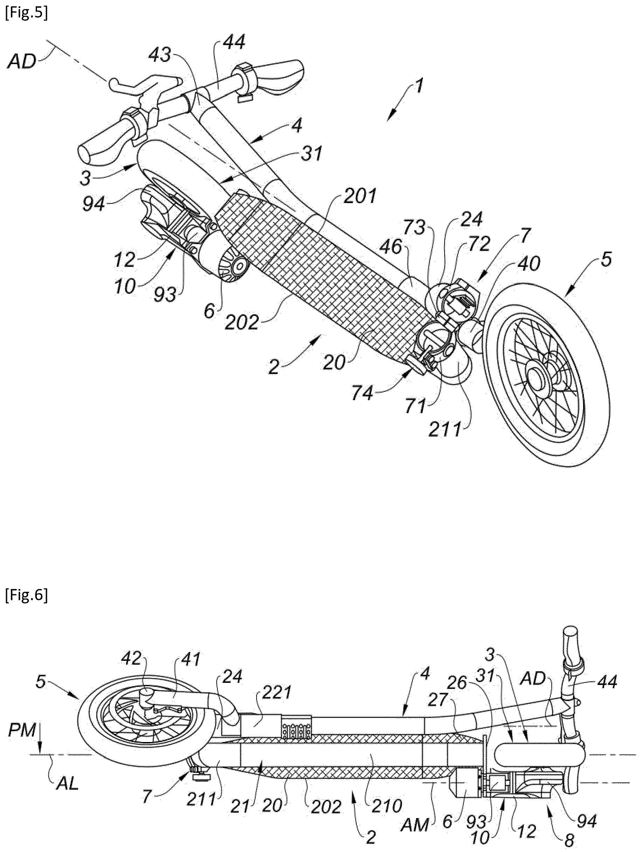

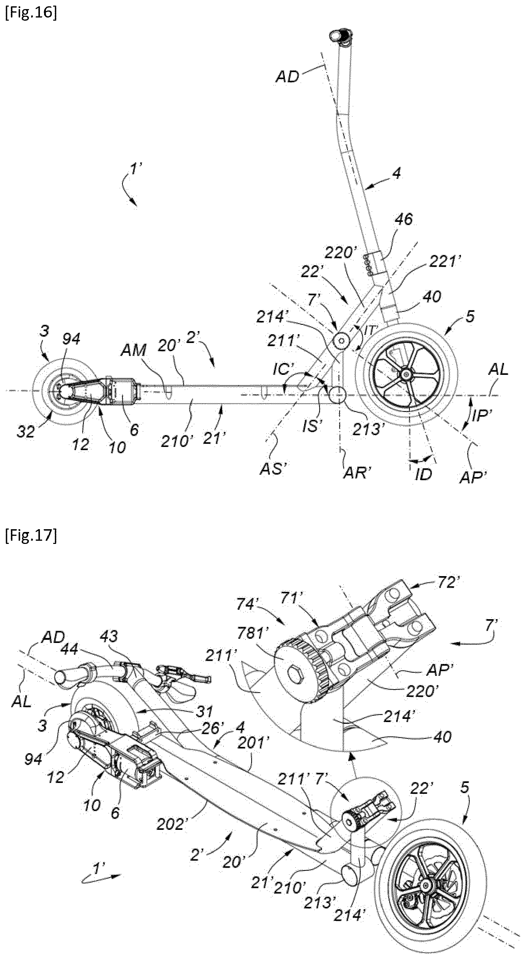

L'articulation pivotante 7 (respectivement 7') permet donc une mobilité relative entre les deux parties 21, 22 (respectivement 21', 22') du châssis 2 (respectivement 2') entre :
- une configuration dépliée, visible sur les figures 1 à 4 pour la trottinette 1 et sur les figures 15 et 16 pour la trottinette 1', dans laquelle la colonne de direction 4 saille vers le haut vis-à-vis du marchepied 20 pour un usage lors d'un déplacement, la colonne de direction 4 s'étendant alors dans le plan médian PM ; et
- une configuration repliée, visible sur les figures 5 et 6 pour la trottinette 1 et sur les figures 17 à 20 pour la trottinette 1', dans laquelle la colonne de direction 4 est rabattue sur le côté gauche, le long du marchepied 20 (respectivement 20').

La description qui suit concerne la forme du châssis 2 de la trottinette 1.

La première partie 21 présente deux sections tubulaires successives :
- une section centrale 210 sur laquelle est fixée le marchepied 20 ; et
- une section inclinée 211 qui prolonge la section centrale 210 (en saillant de la section centrale 210 vers le haut) et qui forme un coude tourné vers le haut, avec un angle de coude IC (visible en Figure 2) compris entre 90 et 120 degrés, et notamment entre 100 et 110 degrés.

La section centrale 210 présente donc une extrémité avant qui se prolonge par un coude, selon l'angle de coude IC, ce coude étant lui-même prolongé par la section inclinée 211. La section centrale 210 s'étend selon l'axe longitudinal AL de la trottinette 1. Par ailleurs, la section inclinée 211 présente un tronçon supérieur (qui forme le tronçon supérieur de la première partie 21) sur lequel est montée l'articulation pivotante 7. Ce tronçon supérieur est rectiligne et s'étend linéairement selon un axe secondaire AS qui est incliné par rapport à l'axe longitudinal AL d'un angle secondaire IS (visible en Figure 2), avec la relation suivante : IS = 180 - IC. Ainsi, cet angle secondaire IS est compris entre 60 et 90 degrés, et notamment entre 70 et 80 degrés.

La seconde partie 22 présente quant à elle :
- une section avant 220, tubulaire et de forme incurvée, qui prolonge le tronçon supérieur de la section inclinée 211 de la première partie 21 ; et
- un tube de direction 221, solidaire d'une extrémité supérieure de la section avant 220, et à l'intérieur duquel est montée pivotante la colonne de direction 4.

En configuration dépliée, le tube de direction 221 s'étend selon un axe de direction AD qui est vertical ou incliné vers l'arrière par rapport à la verticale d'un angle de direction ID (visible en Figure 2) compris entre 0 et 20 degrés, et ainsi la colonne de direction 4 pivote autour de cet axe de direction AD. La colonne de direction 4 est ainsi en liaison pivot dans le tube de direction 221.

Que ce soit pour trottinette 1 comme pour la trottinette 1', la colonne de direction 4 présente une extrémité inférieure 40, en-dessous du tube de direction 221, qui est solidaire d'un bras 41 (ou en variante d'une fourche) ; un tel bras 41 (ou en variante une telle fourche) portant un arbre transversal avant 42 sur lequel est montée pivotante la roue avant 5.

Que ce soit pour trottinette 1 comme pour la trottinette 1', la colonne de direction 4 présente une extrémité supérieure 43 solidaire d'un guidon 44 s'étendant transversalement vis-à-vis de la colonne de direction 4, et où ce guidon 44 est muni de deux poignées 45 respectivement droite et gauche. Il peut également être prévu sur la colonne de direction 4 un système télescopique 46, au-dessus du tube de direction 221, autorisant un réglage en hauteur de colonne de direction 4, et plus spécifiquement du guidon 44.

Il est à noter que la section avant 220 de la seconde partie 22 du châssis 2 présente un tronçon inférieur (qui forme le tronçon inférieur de la seconde partie 22 et qui est opposé au tube de direction 221) sur lequel est montée l'articulation pivotante 7. Ce tronçon inférieur est rectiligne et s'étend linéairement selon l'axe secondaire AS dans la configuration dépliée. Autrement dit, dans la configuration dépliée, le tronçon supérieur de la première partie 21 du châssis 2 et le tronçon inférieur de la seconde partie 22 du châssis 2 sont en alignement le long de cet axe secondaire AS.

Par ailleurs, et comme visible en Figure 2, l'axe de pliage AP est incliné par rapport à l'axe secondaire AS d'un angle intermédiaire IT qui est supérieur à 90 degrés, notamment compris entre 100 et 120 degrés, et notamment de l'ordre de 110 degrés. Ainsi, dans la configuration repliée, le tronçon supérieur de la première partie 21 du châssis 2 et le tronçon inférieur de la seconde partie 22 du châssis 2 sont disposés côte-à-côte mais ne sont pas parallèles, ainsi que visible sur les Figures 5, 12 et 13.

La description qui suit concerne la forme du châssis 2' de la trottinette 1'.

La première partie 21' présente deux sections tubulaires successives :
- une section centrale 210' sur laquelle est fixée le marchepied 20' ; et
- une section inclinée 211' qui saille de la section centrale 210' vers le haut, définissant ainsi une sorte de coude avec un angle de coude IC' (visible en Figure 16) compris entre 100 et 130 degrés, et notamment entre 110 et 120 degrés.

La section centrale 210' s'étend selon l'axe longitudinal AL de la trottinette 1'. Par ailleurs, la section inclinée 211' est rectiligne et s'étend linéairement selon un axe secondaire AS' qui est incliné par rapport à l'axe longitudinal AL d'un angle secondaire IS' (visible en Figure 16), avec la relation suivante : IS' = 180 - IC'. Ainsi, cet angle secondaire IS' est compris entre 50 et 80 degrés, et notamment entre 60 et 70 degrés. Ainsi, cette section inclinée 211' présente un tronçon supérieur (qui forme le tronçon supérieur de la première partie 21') sur lequel est montée l'articulation pivotante 7', où ce tronçon supérieur est rectiligne et s'étend selon cet axe secondaire AS'.

La section centrale 210' présente une extrémité avant sur laquelle est fixée, par exemple par soudage, une section avant 213' qui se présente sous la forme d'un tube s'étendant parallèlement à l'axe transversal AT. La section avant 213' est disposée à l'avant et à distance de la jonction entre la section inclinée 211' et la section centrale 210', et il est prévu une section de renfort 214' s'étendant entre la section avant 213' et le tronçon supérieur de la section inclinée 211'. Cette section de renfort 214' se présente sous la forme d'un tube. Cette section de renfort 214' est rectiligne et s'étend selon un axe de renfort AR' qui est vertical, voire incliné par rapport à la verticale de plus ou moins 5 degrés.

Aussi, le châssis 2' de la trottinette 1' a une structure renforcée à l'avant, avec une section de renfort 214' vertical (ou sensiblement vertical) qui s'étend entre l'axe secondaire AS' et l'axe longitudinal AL, formant ainsi une géométrie triangulaire inversée très appropriée pour la répartition des efforts pour la trottinette 1'.

Pour améliorer le processus de fabrication et de soudage, la section de renfort 214' est relié à la section avant 213' qui se présente sous la forme d'un tube horizontal, qui permet de répartir d'éventuelles contraintes sur une plus grande surface de contact entre la section de renfort 214' et la section avant 213'.

La seconde partie 22' se présente quant à elle :
- une section avant 220', tubulaire et de forme rectiligne, qui prolonge le tronçon supérieur de la section inclinée 211' de la première partie 21' ; et
- un tube de direction 221', solidaire d'une extrémité supérieure de la section avant 220', et à l'intérieur duquel est montée pivotante la colonne de direction 4.

En configuration dépliée, le tube de direction 221' s'étend selon un axe de direction AD qui est vertical ou incliné vers l'arrière par rapport à la verticale d'un angle de direction ID (visible en Figure 16) compris entre 0 et 20 degrés, et ainsi la colonne de direction 4 pivote autour de cet axe de direction AD. La colonne de direction 4 est ainsi en liaison pivot dans le tube de direction 221'.

Comme pour la trottinette 1, la colonne de direction 4 présente une extrémité inférieure 40, en-dessous du tube de direction 221', qui est solidaire d'un bras 41 formant une fourche mono-bras (ou en variante d'une fourche à deux bras) ; un tel bras 41 (ou en variante une telle fourche à deux bras) portant un arbre transversal avant 42 sur lequel est montée pivotante la roue avant 5.

Il est à noter que, dans le cadre des deux trottinettes 1, 1', la fourche avant est donc une fourche mono-bras, avec le seul bras 41 pour porter la roue avant 5, et ce bras 41 est avantageusement disposé sur le premier côté latéral, à l'opposé donc du moteur 6 et du système de transmission 8 décrits ultérieurement dans le cadre d'une motorisation de la trottinette 1 ou 1'. Cette configuration permet donc, lors du pliage de la trottinette 1 ou 1', que l'extrémité inférieure 40 de la colonne de direction 4 soit le plus rapproché du châssis 2 ou 2', procurant ainsi un gain en compacité dans la configuration repliée.

Il est à noter que la section avant 220' de la seconde partie 22' du châssis 2' présente un tronçon inférieur (qui forme le tronçon inférieur de la seconde partie 22' et qui est opposé au tube de direction 221') sur lequel est montée l'articulation pivotante 7'. Ce tronçon inférieur est rectiligne et s'étend linéairement selon l'axe secondaire AS' dans la configuration dépliée. Autrement dit, dans la configuration dépliée, le tronçon supérieur de la première partie 21' du châssis 2' et le tronçon inférieur de la seconde partie 22' du châssis 2' sont en alignement le long de cet axe secondaire AS'.

Par ailleurs, et comme visible en Figure 16, l'axe de pliage AP' est incliné par rapport à l'axe secondaire AS' d'un angle intermédiaire IT qui est égal à 90 degrés. Ainsi, dans la configuration repliée, le tronçon supérieur de la première partie 21 du châssis 2 et le tronçon inférieur de la seconde partie 22 du châssis 2 sont disposés côte-à-côte et sont parallèles, et même la section inclinée 211' et la section avant 220' (qui sont toutes deux rectilignes) sont parallèles, ainsi que visible sur les Figures 17, 18 et 20.

Cette configuration avec la section inclinée 211' et la section avant 220' parallèles en configuration repliée, du fait de l'orientation orthogonale entre l'axe de pliage AP' et l'axe secondaire AS', est particulièrement avantageuse pour des motifs à la fois mécanique et de compacité.

De manière plus précise, la trottinette 1 (respectivement 1') est donc configurable entre :
- la configuration dépliée dans laquelle le tube de direction 221 (respectivement 221') et la colonne de direction 4 s'étendent selon l'axe de direction AD qui est sensiblement vertical, ou du moins qui est vertical ou incliné par rapport à la verticale d'un angle compris entre 0 et 20 degrés ;
- la configuration repliée dans laquelle le tube de direction 221 (respectivement 221') et la colonne de direction 4 s'étendent selon l'axe de direction AD qui a basculé pour être sensiblement horizontal, ou du moins qui est horizontal ou incliné par rapport à l'horizontale d'un angle compris entre 0 et 20 degrés.

Avantageusement, dans la configuration repliée, l'axe de direction AD est parallèle (à plus ou moins cinq degrés) à l'axe longitudinal AL, de sorte que la colonne de direction 4 s'étend parallèlement à cet axe longitudinal AL.

Bien que non illustré, il est avantageux de prévoir un moyen de blocage de la trottinette 1 (respectivement 1') dans la configuration repliée, afin d'éviter qu'elle ne se déplie par inadvertance notamment qu'on la transporte manuellement ou qu'on la pose sur le sol.

Concernant l'articulation pivotante 7 (respectivement 7'), celle-ci se présente sous la forme d'une charnière pourvue d'un premier charnon 71 (respectivement 71') solidaire du tronçon supérieur de la première partie 21 (respectivement 21') et d'un second charnon 72 (respectivement 72') solidaire du tronçon inférieur de la seconde partie 22 (respectivement 22'), où le premier charnon 71 (respectivement 71') et le second charnon 72 (respectivement 72') sont articulés l'un par rapport à l'autre au moyen d'un pivot 73 (respectivement 73') (c'est-à-dire un axe physique) définissant l'axe de pliage AP (respectivement AP').

Ainsi, cette articulation pivotante 7 (respectivement 7') est mobile en pivotement entre :
- une position fermée correspondant à la configuration dépliée de la trottinette 1 (respectivement 1'), dans laquelle le tronçon supérieur de la première partie 21 (respectivement 21') et le tronçon inférieur de la seconde partie 22 (respectivement 22') sont en alignement le long de l'axe secondaire AS (respectivement AS') ; et
- une position ouverte correspondant à la configuration repliée de la trottinette 1 (respectivement 1'), dans laquelle le tronçon supérieur de la première partie 21 (respectivement 21') et le tronçon inférieur de la seconde partie 22 (respectivement 22') sont désalignées et sont disposés côte-à-côte l'un de l'autre suite au pivotement autour de l'axe de pliage AP (respectivement AP').

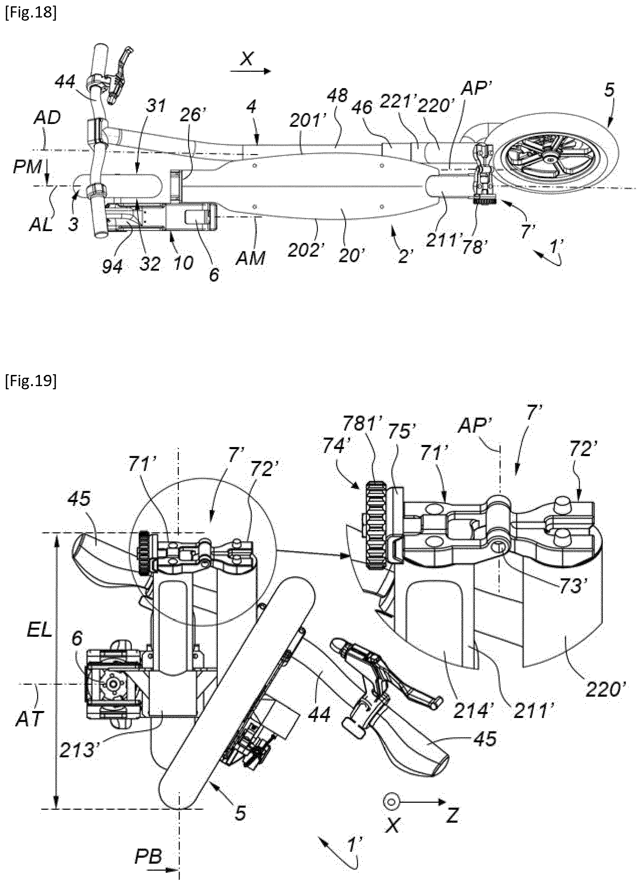

Comme visible sur les Figures 5 et 6 et sur les Figures 17 et 18, l'articulation pivotante 7 (respectivement 7') est agencée pour une mobilité de la colonne de direction 4 de la configuration dépliée vers la configuration repliée dans laquelle la colonne de direction 4 est rabattue sur le premier côté latéral (pour rappel le côté gauche sur les Figures) vis-à-vis du plan médian PM et s'étend à distance de ce plan médian PM (autrement dit hors du plan médian PM), au moins partiellement en-dessous du marchepied 20 (respectivement 20'), le long d'un premier rebord latéral 201 (respectivement 201') du marchepied 20 (respectivement 20') situé sur le premier côté latéral et en regard de la première face latérale 31 de la roue arrière 3. Ce marchepied 20 (respectivement 20') présente également un second rebord latéral 202 (respectivement 202') situé sur le second côté latéral, et donc opposé au premier rebord latéral 201 (respectivement 201') vis-à-vis du plan médian PM, ce second rebord latéral 202 (respectivement 202') étant dégagé et libre dans la configuration repliée.

A cette fin, l'axe de pliage AP (respectivement AP') est décalé sur le premier côté latéral vis-à-vis du plan médian PM, et il s'étend, d'une part, parallèlement au plan médian PM et, d'autre part, de manière inclinée par rapport à l'axe longitudinal AL selon un angle d'inclinaison IP (respectivement IP') (visible sur la Figure 2 et sur la Figure 16), compris entre 20 et 60 degrés, et notamment compris entre 30 et 50 degrés.

Ainsi, cette articulation pivotante 7 (respectivement 7') permet de plier la trottinette 1 (respectivement 1'), en passant de la configuration dépliée à la configuration repliée, en un seul mouvement, à savoir un mouvement de rotation de la colonne de direction 4 selon l'axe de pliage AP (respectivement AP') défini par l'articulation pivotante 7 (respectivement 7').

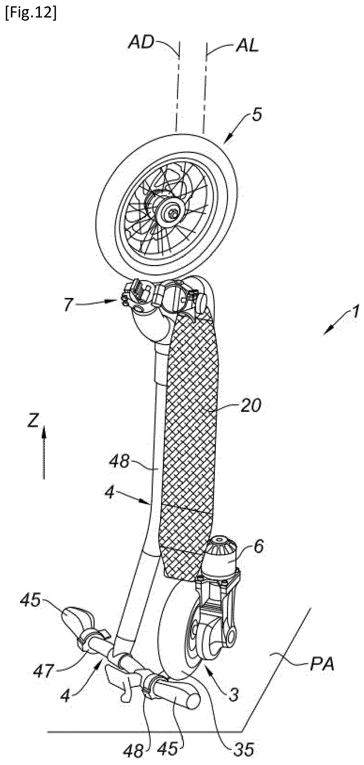

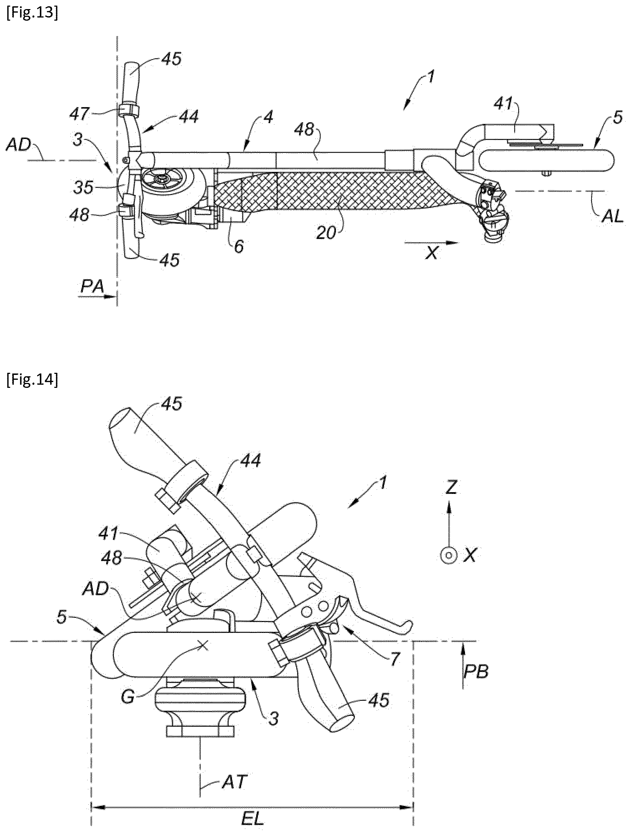

Par ailleurs, comme visible sur les figures 12 et 13 pour la trottinette 1 (et qui vaut également pour la trottinette 1'), dans la configuration repliée, la roue arrière 3 présente un point d'appui 35 (le point de la roue arrière le plus au bout à l'opposé de la roue avant 5) et les deux poignées 45 présentent deux points d'appui 47, 48 respectivement à droite et à gauche, et ces trois points d'appui 35, 47, 48 s'étendent dans un même plan d'appui PA, sous réserve éventuellement d'avoir rentré la colonne de direction 4 en cas de présence d'un système télescopique 46. Autrement dit ces trois points d'appui 35, 47, 48 sont coplanaires et ce plan d'appui PA est substantiellement orthogonal à l'axe longitudinal AL. Cette coplanarité de ces points d'appui 35, 47, 48 autorise, comme visible sur la Figure 12, un appui de la trottinette 1 debout sur ces trois points d'appui 35, 47 reposant sur un sol horizontal (à la manière d'un trépied), avec l'axe longitudinal AL et l'axe de direction AD sensiblement verticaux (un axe vertical Z étant illustré sur cette Figure 12), et donc avec la colonne de direction 4 et le marchepied 20 (ou 20') qui sont substantiellement à la verticale et avec la roue avant 5 qui est au sommet.

Par ailleurs, dans la configuration repliée, il est possible de porter à la main la trottinette 1 (respectivement 1') en plaçant la main sur la colonne de direction 4, au niveau d'une partie centrale 48 visible sur les Figures 12 et 13 et sur la Figure 18, et avec la trottinette 1 (respectivement 1') qui est allongée, c'est-à-dire avec l'axe longitudinal AL et l'axe de direction AD sensiblement horizontaux (un axe horizontal X étant illustré sur les Figures 13 et 14, ainsi que sur la Figure 18), et donc avec la colonne de direction 4 et le marchepied 20 (respectivement 20') qui sont substantiellement à l'horizontale et avec la roue avant 5 qui est sur l'arrière (inversement sur l'avant) du porteur et la roue arrière 3 sur l'avant (inversement sur l'arrière) du porteur.

Comme visible sur la Figure 14 pour la trottinette 1 et sur la Figure 19 pour la trottinette 1', dans la configuration repliée, le guidon 44 est incliné dans un sens par rapport à un plan de base PB qui est orthogonal à l'axe transversal AT (pour rappel l'axe de rotation de la roue arrière 3) et qui passe par le centre de gravité G de la trottinette 1 repliée. De même, la roue avant 5 est inclinée dans un sens opposé par rapport à ce plan de base PB de sorte que, vus de derrière (comme sur la Figure 12) ou de devant (comme sur la Figure 19, le guidon 44 et la roue avant 5 forment ensemble une sorte de « X ». Lors du portage décrit dans le paragraphe ci-dessus, la partie centrale 48 se situe verticalement au-dessus du centre de gravité G, et la trottinette 1 (respectivement 1') s'équilibre naturellement avec le plan de base PB à l'horizontal et donc avec l'axe transversal AT à la verticale (un axe vertical Z étant illustré sur cette Figure 14 et sur cette Figure 19).

Grâce aux inclinaisons opposées du guidon 44 et de la roue avant 5 dans la configuration repliée, lors d'un tel portage, la trottinette 1 (respectivement 1') présente un équilibre latéral entre droite et gauche, ainsi qu'un encombrement latéral EL qui est réduit, et ainsi le guidon 44 et la roue avant 5 ne gênent pas le porteur. Par ailleurs, l'espace entre la roue avant 5 et la roue arrière 3 est libre pour le passage des jambes du porteur le long de la colonne de direction 4.

La suite de la description porte sur la structure de l'articulation pivotante 7 de la trottinette 1.

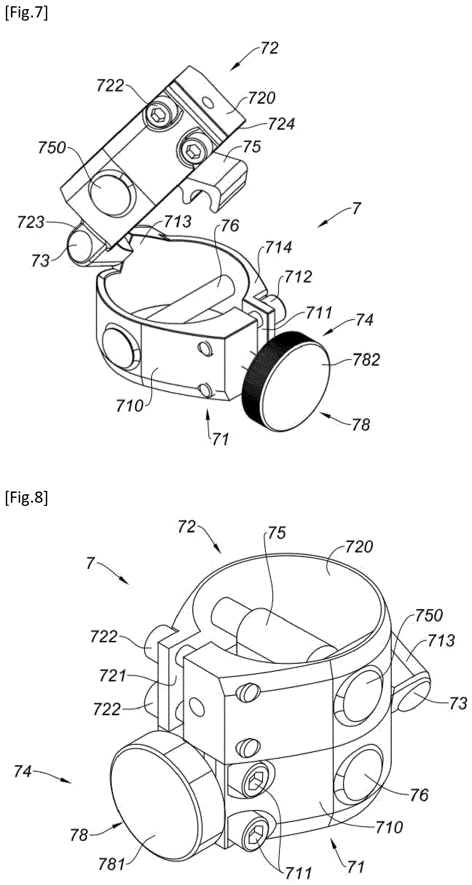

En référence aux figures 7 à 11, il est à noter que le premier charnon 71 comprend une première bride de serrage 710 prévue pour enserrer le tronçon supérieur de la première partie 21, et le second charnon 72 comprend une seconde bride de serrage 720 prévue pour enserrer le tronçon inférieur de la seconde partie 22.

La première bride de serrage 710 comprend un collier de serrage fendu, c'est-à-dire délimitant une fente 711 rectiligne sur sa hauteur, et équipé d'une ou plusieurs vis de serrage 712 qui traversent la fente 711 afin de pouvoir resserrer/desserrer la fente 711 et ainsi permettre un serrage/desserrage autour du tronçon supérieur de la première partie 21 ; un tel tronçon supérieur étant tubulaire et de section circulaire.

De même, la seconde bride de serrage 720 comprend un collier de serrage fendu, c'est-à-dire délimitant une fente 721 rectiligne sur sa hauteur, et équipé d'une ou plusieurs vis de serrage 722 qui traversent la fente 721 afin de pouvoir resserrer/desserrer la fente 721 et ainsi permettre un serrage/desserrage autour du tronçon inférieur de la seconde partie 22 ; un tel tronçon inférieur étant tubulaire et de section circulaire.

La première bride de serrage 710 et la seconde bride de serrage 720 sont munies respectivement d'un premier logement 713 et d'un second logement 723 en saillie sur l'extérieur des colliers respectifs, et recevant intérieurement l'axe physique formant le pivot 73. Ces deux logements 713, 723 sont disposés de manière diamétralement opposés aux fentes 711, 721 respectives vis-à-vis de l'axe secondaire AS. Avantageusement, les deux brides de serrage 710, 720 sont identiques, et elles sont montées tête bêche ou symétriquement pour recevoir ensemble le pivot 73.

Dans la position fermée, les deux brides de serrage 710, 720 sont centrés sur l'axe secondaire AS, avec les fentes 711, 721 qui s'étendent parallèlement à l'axe secondaire AS, et en outre la première bride de serrage 710 présente une face supérieure circonférentielle 714 qui est en appui sur une face inférieure circonférentielle 724 de la seconde bride de serrage 720 selon un plan d'appui PA orthogonal à l'axe secondaire AS.

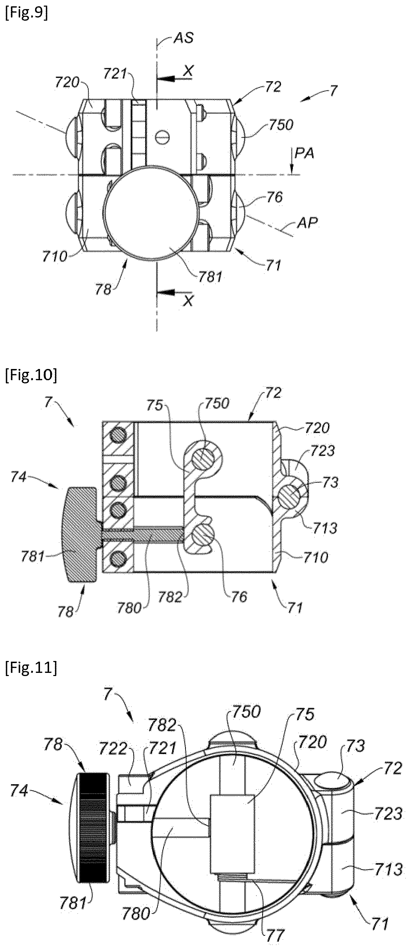

Le pivot 73 s'étend selon l'axe de pliage AP qui s'étend de manière inclinée par rapport au plan d'appui PA selon un angle d'inclinaison IA (visible sur la Figure 9), compris entre 10 et 40 degrés, et notamment compris entre 20 et 30 degrés.

Il est également prévu que l'articulation pivotante 7 intègre un mécanisme de verrouillage 74 propre à verrouiller l'articulation pivotante 7 en position fermée, où ce mécanisme de verrouillage 74 est manipulable manuellement pour pouvoir ouvrir et fermer l'articulation pivotante 7 lors des opérations de pliage et de dépliage.

En référence aux Figures 7 à 11, le mécanisme de verrouillage 74 comprend :
- un élément de verrouillage mobile formé d'un crochet 75 suspendu sur une tige supérieure 750 fixée à l'intérieur de la seconde bride de serrage 720 ;
- un élément de verrouillage statique formé d'une tige inférieure 76 fixée à l'intérieur de la première bride de serrage 710, le crochet 75 et la tige inférieure 76 étant aptes à coopérer ensemble dans une position de verrouillage (comme visible sur la Figure 10) pour verrouiller l'articulation pivotante 7 dans la position fermée ;
- un organe de rappel élastique formé d'un ressort 77 monté à l'intérieur de la seconde bride de serrage 720 et sollicitant le crochet 75 vers une position de déverrouillage (comme visible sur la Figure 7) dans laquelle le crochet 75 et la tige inférieure 76 ne coopèrent pas ensemble pour autoriser une mobilité de l'articulation pivotante 7 vers la position ouverte ; et
- un actionneur manuel 78 monté sur la première bride de serrage 710 et conformé pour agir sur le crochet 75 à l'encontre du ressort 77 pour amener et bloquer le crochet 75 dans la position de verrouillage.

La tige supérieure 750 s'étend orthogonalement à l'axe secondaire AS et donc parallèlement au plan d'appui PA, et elle s'étend également parallèlement à la ou aux vis de serrage 722. Le crochet 75 est monté pivotant sur la tige supérieure 750 et dépasse de la face inférieure circonférentielle 724 de la seconde bride de serrage 720.

Le crochet 75 se termine par une encoche propre à coopérer avec la tige inférieure 76 ; cette tige inférieure 76 formant un élément complémentaire apte à être crocheté par l'encoche dudit crochet 75 en position de verrouillage. La tige inférieure 76 s'étend parallèlement à la tige supérieure 750, et elle s'étend également parallèlement à la ou aux vis de serrage 712.

L'actionneur manuel 78 comprend une tige filetée 780 vissée dans un trou fileté prévu sur la première bride de serrage 710 selon une direction parallèle au plan d'appui PA et orthogonale à la tige inférieure 76. Cette tige filetée 780 est pourvue d'une tête de préhension 781 disposée à l'extérieur de la première bride de serrage 710 afin de pouvoir la saisir pour visser/dévisser la tige filetée 780. Cette tige filetée 780 est pourvue également d'une extrémité libre 782 disposée à l'extérieur de la première bride de serrage 710, en face de la tige inférieure 76, et adaptée pour venir en butée contre le crochet 75 pour le maintenir bloqué contre la tige inférieure 76 (comme visible sur la Figure 10). Ainsi, le mécanisme de verrouillage 74 est verrouillé et l'articulation pivotante 7 est bloquée en position fermée.

Le sens de l'avancement de la tige filetée 780 est perpendiculaire à la tige inférieure 76, ce qui implique que lorsque l'articulation pivotante 7 est fermé et donc en configuration dépliée, la rotation de la tige filetée 780 ferme le crochet 75 contre la tige inférieure 76 en assurant la fermeture de l'ensemble et en rendant impossible son ouverture grâce à la force restante exercée, digne d'une union vissée. Les deux tiges 750, 76 sont disposés de façon à ce que le crochet 75 les unissent en utilisant les forces séparatrices de la structure dans la même ligne d'action.

Pour déverrouiller le mécanisme de verrouillage 74, et ainsi ouvrir l'articulation pivotante 7, il suffit de dévisser l'actionneur manuel 78 et le ressort 77 agit sur le crochet 75 pour le faire reculer et pour se séparer de la tige inférieure 76, permettant ainsi de pouvoir plier la trottinette 1.

Avantageusement, les tiges 750, 76 traversent les deux brides de serrage 710, 720 (comme décrit ci-dessus) et traversent également le tronçon supérieur de la première partie 21 et le tronçon inférieur de la seconde partie 22.

Autrement dit, lors du montage du premier charnon 71 :
- la première bride de serrage 710 est serrée autour du tronçon supérieur de la première partie 21 de sorte à aligner des orifices inférieurs ménagés à la fois dans la première bride de serrage 710 et dans le tronçon supérieur de la première partie 21 ; et ensuite
- la tige inférieure 76 est engagée à travers ces orifices inférieurs pour être solidarisée à la fois à la première bride de serrage 710 et au tronçon supérieur de la première partie 21 ;
- la tige inférieure 76 est enfin bloquée en position par exemple au moyen d'un écrou ou d'une goupille.

De même, lors du montage du second charnon 72 :
- la seconde bride de serrage 720 est serrée autour du tronçon inférieur de la seconde partie 22 de sorte à aligner des orifices supérieurs ménagés à la fois dans la seconde bride de serrage 720 et dans le tronçon inférieur de la seconde partie 22 ; et ensuite
- la tige supérieure 750 est engagée à travers ces orifices supérieurs pour être solidarisée à la fois à la seconde bride de serrage 720 et au tronçon inférieur de la seconde partie 22 ;
- la tige supérieure 750 est enfin bloquée en position par exemple au moyen d'un écrou ou d'une goupille.

Ensuite, une fois les deux charnons 71, 72 montés, le pivot 73 est mis en place pour accoupler les deux charnons 71, 72 en rotation. En outre, le crochet 75 est mis en place sur la tige supérieure 750, le ressort 77 est également mis en place à l'intérieur de la seconde bride de serrage 720 ainsi que l'actionneur manuel 78 qui traverse à la fois la première bride de serrage 710 et le tronçon supérieur de la première partie 21.

Ce mécanisme de verrouillage 74 assure ainsi la rigidité de la liaison entre la première partie 21 et la seconde partie 22 du châssis 2 en position dépliée, pour une sécurité accrue en usage. Les tiges 750, 76 traversant les deux brides de serrage 710, 720 ainsi que la première partie 21 et la seconde partie 22 du châssis 2 contribuent à la rigidité de l'ensemble par un système redondant (car venant compléter le serrage des brides 710, 720 autour des parties 21, 22 du châssis 2) assurant en même temps une sécurité supplémentaire.

Dans une variante non illustrée, le mécanisme de verrouillage 74 peut être monté sur l'extérieur de la structure en maintenant le concept d'union grâce à un crochet et avec un blocage au moyen d'un actionneur manuel mobile en vissage/dévissage.

La suite de la description porte sur la structure de l'articulation pivotante 7' de la trottinette 1'.

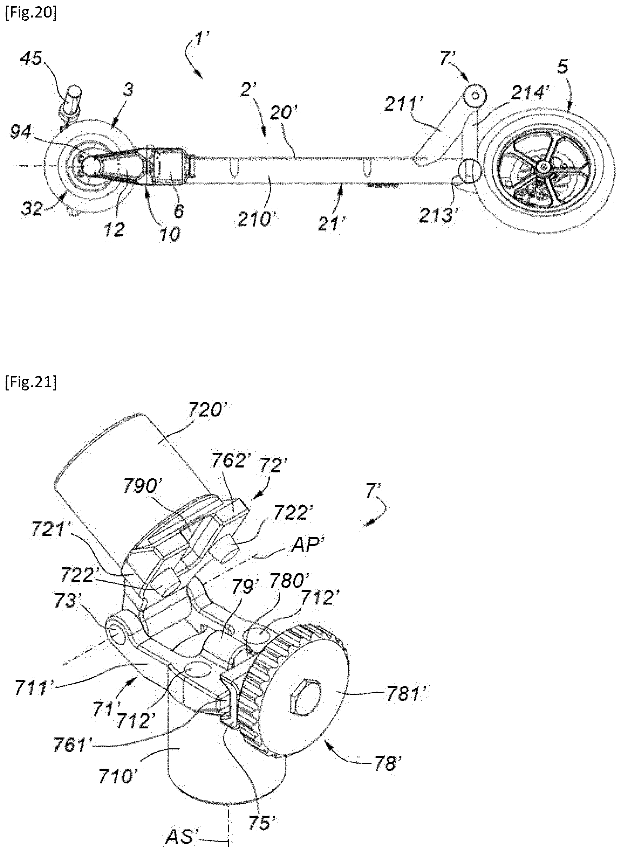

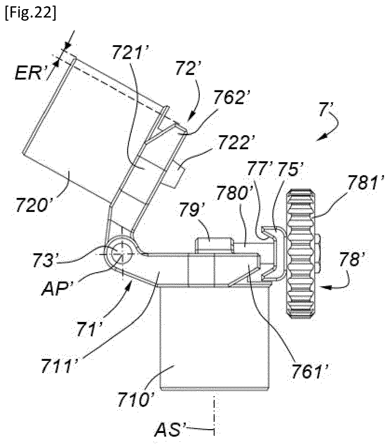

En référence aux Figures 21 et 22, le premier charnon 71' comprend une première douille 710' de forme cylindrique et prévue pour être fixée, notamment par soudage, à l'intérieur du tronçon supérieur de la première partie 21', et le second charnon 72' comprend une seconde douille 720' de forme cylindrique et prévue pour être fixée, notamment par soudage, à l'intérieur du tronçon inférieur de la seconde partie 22.

Ces deux douilles 710', 720' permettent de positionner les charnons 71', 72' dans des parties 21', 22' de structures tubulaires, tout en favorisant une élimination des jeux ou des mouvements. Ces deux douilles 710', 720' augmentent également l'épaisseur entre les zones de contact des parties 21', 22', ce qui optimise la répartition de la masse dans la zone la plus demandée. Ainsi, il est possible de maintenir pour le châssis 2', au niveau de l'articulation pivotante 7', une structure tubulaire très légère avec l'apport de matière dans la zone de plus grande contrainte où se situerait également des soudures.

Le premier charnon 71' comprend, solidaire du premier plot 710', un premier élément 711' formant un corps de charnon, et le second charnon 72' comprend, solidaire du second plot 720', un second élément 721' formant un corps de charnon, où ce premier élément 711' et ce second élément 721' sont munis de logements respectifs recevant intérieurement l'axe physique formant le pivot 73'.

Le premier élément 711' présente une face supérieure dans laquelle sont ménagées deux trous de centrage 712', et le second élément 721' présente une face inférieure de laquelle font saillie deux plots de centrage 722', avantageusement de forme conique. Dans la position fermée de l'articulation pivotante 7', la face supérieure du premier élément 711' et la face inférieure du second élément 721' sont en appui l'une contre l'autre selon un plan d'appui orthogonal à l'axe secondaire AS'.

Le pivot 73' s'étend selon l'axe de pliage AP' qui s'étend de manière parallèle au plan d'appui cité dans le paragraphe ci-dessus.

Par ailleurs, dans la position fermée de l'articulation pivotante 7', les plots de centrage 722' s'engagent à l'intérieur des trous de centrage 712' respectifs, qui sont de formes complémentaires de celles des plots de centrage 722'. La présence des deux plots de centrage 722' permet d'augmenter la surface de contact entre les deux charnons 71', 72' en positon fermée. De cette façon, la déformation due à la flexion et à toute contrainte de cisaillement présente au contact des deux charnons 71', 72' est plus efficacement bloquée par ces deux plots de centrage 722'.

Le premier élément 711' présente également une première lèvre de verrouillage 761', de forme biseautée, et qui est diamétralement opposée au pivot vis-à-vis de l'axe secondaire AS'. Le second élément 721' présente également une seconde lèvre de verrouillage 762', de forme biseautée, et qui est diamétralement opposée au pivot vis-à-vis de l'axe secondaire AS' dans la position fermée. Aussi, en position fermée, ces deux lèvres de verrouillage 761', 762' sont plaquées l'une contre l'autre selon le plan d'appui.

Il est également prévu que l'articulation pivotante 7' intègre un mécanisme de verrouillage 74' propre à verrouiller l'articulation pivotante 7' en position fermée, où ce mécanisme de verrouillage 74' est manipulable manuellement pour pouvoir ouvrir et fermer l'articulation pivotante 7' lors des opérations de pliage et de dépliage.

En référence aux Figures 21 et 22, le mécanisme de verrouillage 74' comprend :
- un élément de verrouillage mobile 75' rattaché au premier charnon 71' ;
- un élément de verrouillage complémentaire formé de la seconde lèvre de verrouillage 762' et qui est donc rattaché au second charnon 72' ; et
- un actionneur manuel 78' conformé pour agir sur cet élément de verrouillage mobile 75'.

L'élément de verrouillage mobile 75' et la seconde lèvre de verrouillage 762' sont aptes à coopérer ensemble dans une position de verrouillage pour verrouiller l'articulation pivotante 7' dans la position fermée, depuis une position de déverrouillage (visible sur les Figures 21 et 22) dans laquelle cet élément de verrouillage mobile 75' et cette seconde lèvre de verrouillage 762' ne coopèrent pas ensemble pour autoriser une mobilité vers la position ouverte.

Plus précisément, l'élément de verrouillage mobile 75' présente une gorge 77' qui est de forme complémentaire aux deux lèvres de verrouillage 761', 762' lorsque plaquées l'une contre l'autre en position fermée, et ainsi, dans la position fermée et dans la position de verrouillage, l'élément de verrouillage mobile 75' enchâsse les deux lèvres de verrouillage 761', 762' à l'intérieur de sa gorge 77' et verrouille ainsi l'articulation pivotante 7' en position fermée.

L'actionneur manuel 78' est prévu pour déplacer pour l'élément de verrouillage mobile 75' et ainsi amener et bloquer cet élément de verrouillage mobile 75' dans la position de verrouillage en le rapprochant des deux lèvres de verrouillage 761', 762', et à l'inverse éloigner l'élément de verrouillage mobile 75' des deux lèvres de verrouillage 761', 76 pour être en position déverrouillée et permettre l'ouverture de l'articulation pivotante 7'.

L'actionneur manuel 78' comprend une tige filetée 780' vissée dans un manchon taraudé 79' intégré au premier charnon 71', et plus spécifiquement intégré au premier élément 711', en saillie de sa face supérieure. Ce manchon taraudé 79' s'étend entre les deux trous de centrage 712'. Une rainure 790' est prévue dans la face inférieure du second élément 721' afin de recevoir le manchon taraudé 79' dans la position fermée, et ainsi ne pas gêner l'appui selon le plan d'appui.

La tige filetée fileté s'étend selon une direction parallèle au plan PA et orthogonale à l'axe de pliage AP'. Cette tige filetée 780' traverse l'élément de verrouillage mobile 75' et est pourvue d'une tête de préhension 781' disposée à l'extérieur afin de pouvoir la saisir pour visser/dévisser la tige filetée 780', et ainsi déplacer l'élément de verrouillage mobile 75'. Ainsi, le mécanisme de verrouillage 74' est apte à verrouiller et bloquer l'articulation pivotante 7' en position fermée.

Comme visible sur la Figure 22, les deux lèvres de verrouillage 761', 762' sont radialement en retrait par rapport aux douilles 710', 720' respectives, ainsi que matérialisé sur la Figure 22 par l'écartement radial ER' associé à la seconde lèvre de verrouillage 762'. Ainsi dans la position ouverte, l'élément de verrouillage mobile 75' peut rester en appui sur le sommet de la première douille 710', ainsi que visible sur la Figure 22, ce qui permet à cet élément de verrouillage mobile 75' de ne pas tourner autour de la tige filetée 780' et rester donc en alignement avec la première lèvre de verrouillage 761'. Aussi, il n'est pas nécessaire de réaligner cet élément de verrouillage mobile 75' lors des opérations d'ouverture/fermeture et de verrouillage/déverrouillage.

La suite de la description porte sur la motorisation de la trottinette 1 (respectivement 1').

En effet, dans l'exemple illustré sur les Figures, la trottinette 1 (respectivement 1') est une trottinette motorisée et plus spécifiquement une trottinette électrique ou trottinette à motorisation électrique. A cet effet, la trottinette 1 (respectivement 1') comprend un moteur 6 accouplé à la roue arrière 3 via un système de transmission 8 pour l'entraîner en rotation selon l'axe transversal AT, la roue arrière 3 formant ainsi la roue motrice propre à propulser la trottinette 1.

Le moteur 6 est monté fixement, par exemple par boulonnage, sur une platine 26 (respectivement 26') solidaire du châssis 2 (respectivement 2'), et plus spécifiquement une platine 26 (respectivement 26') qui est solidaire d'une extrémité arrière de la première partie 21 (respectivement 21') du châssis 2 (respectivement 2').

Cette platine 26 (respectivement 26') s'étend dans un plan vertical, orthogonalement à l'axe longitudinal AL de la trottinette 1 (respectivement 1'). Cette platine 26 (respectivement 26') présente deux faces opposées, à savoir :
- une face avant tournée vers l'avant (côté roue avant 5) et de laquelle fait saillie le moteur 6 ; et
- une face arrière tournée vers l'arrière (côté roue arrière 3).

Cette platine 26 (respectivement 26') est asymétrique par rapport au plan médian PM de la trottinette 1 en présentant une portion latérale qui dépasse latéralement sur le second côté latéral (pour rappel le côté droit sur les Figures) vis-à-vis du plan médian PM. Cette portion latérale dépasse donc sur le second côté latéral, au-delà du châssis 2 (respectivement 2') et même au-delà du marchepied 20 (respectivement 20'), tout en se situant au moins partiellement en-dessous de ce même marchepied 20 (respectivement 20').

Aussi, le moteur 6 est fixé sur cette portion latérale et ainsi ce moteur 6 s'étend sur le second côté latéral, à côté de l'extrémité arrière de la première partie 21 (respectivement 21') du châssis 2 (respectivement 2'). Le moteur 6 s'étend donc à l'arrière du marchepied 20 (respectivement 20'), et partiellement en-dessous du marchepied 20 (respectivement 20'), en dépassant en partie latéralement à droite du marchepied 20 (respectivement 20').

Dans le cas de la trottinette 1, et comme visible sur les Figures 1, 2, 3 et 5, le marchepied 20 présente un gradin arrière 27, en surélévation, pour une disposition du moteur 6 partiellement en-dessous de ce gradin arrière 27.

Dans le cas de la trottinette 1', et comme visible sur les Figures 15 et 16, le marchepied 20' est plat, sans surélévation, au niveau de son extrémité arrière, de sorte que le moteur 6 s'étend partiellement en-dessous du marchepied 20' et partiellement au-dessus du marchepied 20'.

Le moteur 6 est équipé d'un arbre moteur (non illustré) entraîné en rotation selon un axe moteur AM parallèle à l'axe longitudinal AL, où cet arbre moteur traverse la platine 26 (respectivement 26') pour saillir au-delà de la face arrière de la platine 26 (respectivement 26').

Concernant la transmission entre l'arbre moteur et la roue arrière 3, le système de transmission 8 comprend un système à engrenage (non illustré car dissimulé sur les Figures par un carter 94) formant un engrenage conique à denture hélicoïdale ou droite muni d'une couronne dentée en engrènement avec un pignon denté.

Le pignon denté est solidaire d'un arbre de pignon s'étendant de manière coaxiale et dans le prolongement de l'arbre moteur, et cet arbre de pignon est accouplé en rotation à l'arbre moteur via un accouplement à élastomère 93 (visible sur les Figures 5 et 6). Ainsi, la rotation de l'arbre moteur entraîne la rotation de l'arbre de pignon et donc du pignon denté selon l'axe moteur AM parallèle à l'axe longitudinal AL.

A la place de l'accouplement à élastomère 93, il peut être envisageable de prévoir d'autre moyens de transmission entre l'arbre de pignon et l'arbre moteur, comme par exemple un joint homocinétique, un joint de transmission, un joint universel, voire un système à engrenage préliminaire (en sus du système à engrenage précité).

Le système de transmission 8 comprend en outre un arbre transversal arrière s'étendant selon l'axe transversal AT orthogonal à l'axe moteur AM. Cet arbre transversal arrière présente deux portions d'extrémité opposées, à savoir :
- une première portion d'extrémité accouplée en rotation à la couronne dentée, cette couronne dentée étant ainsi portée par cette première portion d'extrémité ;
- une seconde portion d'extrémité accouplée en rotation à la roue arrière 3, cette roue arrière 3 étant ainsi portée par cette seconde portion d'extrémité.

Ainsi, une rotation de l'arbre moteur selon l'axe moteur AM est convertible par ce système à engrenage en une rotation de l'arbre transversal arrière et de la roue arrière 3 autour de l'axe transversal AT. Par ailleurs, ce système à engrenage présente un rapport de transmission entre l'arbre moteur en entrée et l'arbre transversal arrière en sortie qui est fixe et compris entre 1:2 et 1:5.

Le système de transmission 8 comprend en outre une structure arrière 10 fixée au châssis 2 et supportant le système à engrenage, l'arbre transversal arrière et la roue arrière 3.

Il est à noter aussi que la roue arrière 3 présente deux faces latérales 31, 32 opposées, à savoir :
- une première face latérale 31 sur le premier côté latéral (pour rappel le côté gauche sur les Figures) vis-à-vis du plan médian PM, et
- une seconde face latérale 32 sur le second côté latéral (pour rappel le côté droit sur les Figures) vis-à-vis du plan médian PM.

Ces faces latérales 31, 32 forment les flancs à droite et à gauche de la roue arrière 31, qui bordent une bande circonférentielle de roulement 33.

Cette structure arrière 10 s'étend latéralement sur le seul second côté latéral vis-à-vis du plan médian PM, tout comme le moteur 6 et la portion latérale de la platine 26 (respectivement 26') qui s'étendent aussi sur ce second côté latéral. Cette structure arrière 10 s'étend en partie en regard de la seconde face latérale 32 de la roue arrière 3.

Cette structure arrière 10 est fixée sur la platine 26 (respectivement 26'), et plus spécifiquement sur la portion latérale, et fait saillie de sa face arrière. Ainsi, le moteur 6 et la structure arrière 10 s'étendent de part et d'autre de cette platine 26 (respectivement 26'). Cette structure arrière 10 est par exemple fixée par boulonnage, vissage ou soudage sur la platine 26 (respectivement 26'), tout comme il est envisageable que cette structure arrière 10 vienne de matière avec la platine 26 (respectivement 26').

Cette structure arrière 10 comprend deux flasques 11, 12, respectivement un flasque interne 11 et un flasque externe 12, s'étendant en vis-à-vis et écartés l'un de l'autre. Le flasque interne 11 s'étend sur l'intérieur le long de la roue arrière 3 et en regard de la second face latérale 32 de la roue arrière 3, tandis que le flasque externe 12 s'étend sur l'extérieur, à une plus grand distance de la second face latérale 32 de la roue arrière 3 comparativement au flasque interne 11.

Ces deux flasques 11, 12 s'étendent parallèlement à l'axe moteur AM et sont orthogonales à l'axe transversal AT. Ces deux flasques 11, 12 s'étendent à partir de la face arrière de la platine 26 (respectivement 26'), sur laquelle ils sont fixés.

Cette structure arrière 10 comprend également un plateau s'étendant entre les deux flasques 11, 12. Ce plateau s'étend orthogonalement à l'axe moteur AM et se situe à distance de la platine 26 (respectivement 26'). Ainsi, cette structure arrière 10 présente une structure en « H » avec les deux flasques 11, 12 parallèles et le plateau joignant les deux flasques 11, 12 entre eux. Ce plateau est fixé sur les deux flasques 11, 12 par exemple par vissage, boulonnage ou soudage, tout comme il est envisageable que ce plateau vienne de matière avec les deux flasques 11, 12.

Ce plateau est muni d'un orifice, appelé orifice avant, traversé par l'arbre de pignon solidaire du pignon denté. Cet orifice avant supporte au moins un palier de roulement dans lequel est monté rotatif l'arbre de pignon. Ainsi, l'arbre de pignon est porté par ce plateau et est guidé en rotation dans son orifice avant.

L'accouplement à élastomère 93 est situé entre le plateau et la platine 26 (respectivement 26'), et s'étend entre les deux flasques 11, 12.

Les deux flasques 11, 12 présentent des orifices respectifs, appelés orifices arrière, qui sont ménagés en vis-à-vis et qui sont tous deux traversés par la première portion d'extrémité de l'arbre transversal arrière. Ces deux orifices arrière supportent des paliers de roulement respectifs dans lesquels est montée rotative la première portion d'extrémité de l'arbre transversal arrière. Ainsi, l'arbre transversal arrière est porté par ces deux flasques 11, 12 et est guidé en rotation dans leurs orifices arrière.

Les deux flasques 11, 12 encadrent le pignon denté et la couronne dentée, et la première portion d'extrémité de l'arbre transversal arrière s'étend principalement entre les deux flasques 11, 12 de la structure arrière 10, tandis que la seconde portion d'extrémité de l'arbre transversal arrière dépasse de la structure arrière 10, et plus spécifiquement dépasse du flasque interne 11 pour supporter en porte-à-faux la roue arrière 3.

La couronne dentée est solidaire en rotation de l'arbre transversal arrière au moyen d'une clavette accouplant la couronne dentée à la première portion d'extrémité de l'arbre transversal arrière.

La roue arrière 3 s'étend à une distance fixe vis-à-vis du flasque interne 11 de la structure arrière 10, et cette roue arrière 3 est portée en porte-à-faux par la seconde portion d'extrémité de l'arbre transversal arrière. Il est à noter que la seconde face latérale 32 de la roue arrière 3 est couverte par la structure arrière 10 et par le système à engrenage, tandis que la première face latérale 31 de la roue arrière 3 est complètement dégagée et libre d'accès, grâce à ce montage en porte-à-faux.

La roue arrière 3 présente un moyeu qui est traversé par la seconde portion d'extrémité et qui est solidaire en rotation de cette seconde portion d'extrémité de l'arbre transversal arrière au moyen d'au moins une clavette accouplant le moyeu à la seconde portion d'extrémité de l'arbre transversal arrière.

A la place de l'accouplement à clavette entre l'arbre transversal arrière et le moyeu de la roue arrière, il peut être envisageable de prévoir d'autres moyens d'accouplement en rotation, comme par exemple un accouplement à bride, un accouplement à goupille, un accouplement à étrier, un accouplement à bague, ...

Il est prévu un carter 94 fixé sur la structure arrière 10 et comprenant :
- une partie arrière de forme circulaire qui enveloppe la couronne dentée sur toute sa circonférence, et
- une partie avant qui prolonge la partie arrière et qui enveloppe le pignon denté jusqu'au plateau 13.

## Revendications

1. Trottinette (1 ; 1'), de type trottinette pliable, comprenant un châssis (2 ; 2') et une colonne de direction (4) équipée d'une roue avant (5) et montée pivotante sur ledit châssis (2 ; 2') selon un axe de direction (AD), le châssis (2 ; 2') comprenant, d'une part, une première partie (21 ; 21') supportant une roue arrière (3) rotative autour d'un axe transversal (AT) et un marchepied (20 ; 20') et, d'autre part, une seconde partie (22 ; 22') supportant en pivot la colonne de direction (4), dans laquelle la trottinette (1 ; 1') présente un plan médian (PM) orthogonal à l'axe transversal (AT) et délimitant un premier côté latéral et un second côté latéral opposés, ledit plan médian (PM) incluant un axe longitudinal (AL) passant par la roue avant (5) et par la roue arrière (3) et parallèle à une direction d'avancée de la trottinette (1 ; 1') lorsque celle-ci avance en ligne droite, et la roue arrière (3) présente une première face latérale (31) sur ledit premier côté latéral et une seconde face latérale (32), opposée à la première face latérale (31), sur ledit second côté latéral,
et dans laquelle la première partie (21 ; 21') et la seconde partie (22 ; 22') du châssis (2 ; 2') sont reliées l'une à l'autre par une articulation pivotante (7 ; 7') selon un axe de pliage (AP ; AP') permettant une mobilité de l'une par rapport à l'autre entre :
- une configuration dépliée dans laquelle la colonne de direction (4) saille vers le haut vis-à-vis du marchepied (20 ; 20') pour un usage lors d'un déplacement, ladite colonne de direction (4) s'étendant dans le plan médian (PM) ; et
- une configuration repliée dans laquelle la colonne de direction (4) est rabattue le long du marchepied (20 ; 20') ;
dans laquelle l'articulation pivotante (7 ; 7') est agencée pour une mobilité de la colonne de direction (4) de la configuration dépliée vers la configuration repliée dans laquelle la colonne de direction (4) est rabattue sur le premier côté latéral vis-à-vis du plan médian (PM) et s'étend à distance dudit plan médian (PM), au moins partiellement en-dessous du marchepied (20 ; 20'), le long d'un premier rebord latéral (201 ; 201') du marchepied (20 ; 20') situé sur ledit premier côté latéral et en regard de la première face latérale (31) de la roue arrière (3) ;
ladite trottinette (1) étant **caractérisée en ce que** l'axe de pliage (AP ; AP') est décalé sur le premier côté latéral vis-à-vis du plan médian (PM) et il s'étend de manière inclinée par rapport à l'axe longitudinal (AL) selon un angle d'inclinaison (IP ; IP') compris entre 20 et 60 degrés, notamment entre 30 et 50 degrés.

2. Trottinette (1; 1') selon la revendication 1, dans laquelle l'axe de pliage (AP; AP') s'étend parallèlement au plan médian (PM).

3. Trottinette (1; 1') selon l'une quelconque des revendications précédentes, dans laquelle :
- dans la configuration dépliée, l'axe de direction (AD) est vertical ou incliné par rapport à la verticale d'un angle compris entre 0 et 20 degrés ; et
- dans la configuration repliée, l'axe de direction (AD) est horizontal ou incliné par rapport à l'horizontale d'un angle compris entre 0 et 20 degrés.

4. Trottinette (1; 1') selon l'une quelconque des revendications précédentes, dans laquelle, dans la configuration repliée, l'axe de direction (AD) est parallèle, à plus ou moins 5 degrés, à l'axe longitudinal (AL).

5. Trottinette (1; 1') selon l'une quelconque des revendications précédentes, dans laquelle l'articulation pivotante (7 ; 7') se présente sous la forme d'une charnière pourvue d'un premier charnon (71 ; 71') solidaire d'un tronçon supérieur de la première partie (21; 21') du châssis (2 ; 2') et d'un second charnon (72 ; 72') solidaire d'un tronçon inférieur de la seconde partie (22) du châssis (2), où le premier charnon (71 ; 71') et le second charnon (72 ; 72') sont articulés l'un par rapport à l'autre au moyen d'un pivot (73 ; 73') définissant l'axe de pliage (AP ; AP'), de sorte que ladite articulation pivotante (7 ; 7') est mobile en pivotement entre :
- une position fermée correspondant à la configuration dépliée de la trottinette (1 ; 1'), dans laquelle le tronçon supérieur de la première partie (21) du châssis (2) et le tronçon inférieur de la seconde partie du châssis (2) sont en alignement le long d'un axe secondaire (AS ; AS') contenu dans le plan médian (PM) ; et
- une position ouverte correspondant à la configuration repliée de la trottinette (1; 1'), dans laquelle le tronçon supérieur de la première partie (21 ; 21') du châssis (2 ; 2') et le tronçon inférieur de la seconde partie (22 ; 22') du châssis (2 ; 2') sont désalignées et sont disposés côte-à-côte suite au pivotement autour de l'axe de pliage (AP ; AP').

6. Trottinette (1 ; 1') selon la revendication 5, dans laquelle l'axe secondaire (AS ; AS') est incliné par rapport à l'axe longitudinal (AL) d'un angle secondaire (IS) compris entre 45 et 90 degrés, et notamment entre 50 et 80 degrés.

7. Trottinette (1 ; 1') selon l'une quelconque des revendications 5 et 6, dans laquelle l'axe de pliage (AP ; AP') est incliné par rapport à l'axe secondaire (AS ; AS') d'un angle intermédiaire (IT ; IT') qui est compris entre 90 et 120 degrés.

8. Trottinette (1; 1') selon l'une quelconque des revendications 5 à 7, dans laquelle la première partie (21 ; 21') présente deux sections tubulaires successives :
- une section centrale (210 ; 210') sur laquelle est fixée le marchepied (20 ; 20') et qui s'étend selon l'axe longitudinal (AL) ; et
- une section inclinée (211 ; 211') qui saille de la section centrale (210 ; 210') et qui s'étend selon l'axe secondaire (AS ; AS').

9. Trottinette (1') selon la revendication 8, dans laquelle la première partie (21') comprend en outre :
- une section avant (213') fixée sur une extrémité avant de la section centrale (210'), à l'avant et à distance d'une jonction entre la section inclinée (211') et la section centrale (210'), et
- une section de renfort (214') s'étendant entre la section avant (213') et le tronçon supérieur de la première partie (21'), ladite section de renfort (214') s'étendant entre l'axe secondaire (AS') et l'axe longitudinal (AL) pour former une structure de renfort à géométrie triangulaire inversée.

10. Trottinette (1 ; 1') selon l'une quelconque des revendications 5 à 9, dans laquelle l'articulation pivotante (7 ; 7') intègre un mécanisme de verrouillage (74 ; 74') propre à verrouiller l'articulation pivotante (7 ; 7') dans la position fermée.

11. Trottinette (1; 1') selon la revendication 10, dans laquelle le mécanisme de verrouillage (74 ; 74') comprend :
- un élément de verrouillage mobile (75 ; 75') rattaché à l'un du premier charnon (71 ; 71') et du second charnon (72 ; 72') ;
- un élément de verrouillage complémentaire (76 ; 762') rattaché à l'autre du premier charnon (71 ; 71') et du second charnon (72 ; 72'), ledit élément de verrouillage mobile (75 ; 75') et ledit élément de verrouillage complémentaire (76 ; 762') étant aptes à coopérer ensemble dans une position de verrouillage pour verrouiller l'articulation pivotante (7) dans la position fermée, depuis une position de déverrouillage dans laquelle ledit élément de verrouillage mobile (75 ; 75') et ledit élément de verrouillage statique (76 ; 762') ne coopèrent pas ensemble pour autoriser une mobilité vers la position ouverte ; et
- un actionneur manuel (78 ; 78') conformé pour agir sur ledit élément de verrouillage mobile (75 ; 75') pour amener et bloquer ledit élément de verrouillage mobile (75 ; 75') dans la position de verrouillage.

12. Trottinette (1; 1') selon l'une quelconque des revendications précédentes, dans laquelle la colonne de direction (4) présente une extrémité supérieure (43) solidaire d'un guidon (44) s'étendant transversalement et muni de deux poignées (45) respectivement à droit et à gauche et, dans la configuration repliée, la roue arrière (3) et les deux poignées (45) présentent respectivement trois points d'appui (35, 47, 48) s'étendant dans un même plan autorisant un appui de la trottinette (1; 1') debout sur ces trois points d'appui (35, 47, 48) reposant sur un sol horizontal.

13. Trottinette (1; 1') selon la revendication 12, dans laquelle, dans la configuration repliée, le guidon (44) est incliné dans un sens par rapport à un plan de base (PB) qui est orthogonal à l'axe transversal (AT), et la roue avant (5) est inclinée dans un sens opposé par rapport à ce même plan de base (PB).

14. Trottinette (1; 1') selon l'une quelconque des revendications précédentes, dans laquelle la roue arrière (3) est portée par un arbre transversal arrière s'étendant selon l'axe transversal (AT), et ledit arbre transversal arrière est supporté par une structure arrière (10) fixée au châssis (2 ; 2') et s'étendant latéralement sur le second côté latéral vis-à-vis du plan médian (PM), et ainsi en regard de la seconde face latérale (32) de la roue arrière (3), de sorte que l'arbre transversal arrière dépasse de la structure arrière (10) pour supporter en porte-à-faux la roue arrière (3), et que la première face latérale (31) de la roue arrière (3) est dégagée.

## Patentansprüche

1. Roller (1; 1'), vom Typ eines zusammenklappbaren Rollers, der einen Rahmen (2; 2') und eine Lenksäule (4) umfasst, die mit einem Vorderrad (5) ausgestattet und um eine Lenkachse (AD) schwenkbar am Rahmen (2; 2') montiert ist, wobei der Rahmen (2; 2') einerseits einen ersten Teil (21; 21'), der ein sich um eine Querachse (AT) drehendes Hinterrad (3) und ein Trittbrett (20; 20') trägt, und andererseits einen zweiten Teil (22; 22') umfasst, der die Lenksäule (4) schwenkbar trägt, wobei der Roller (1; 1') eine Mittelebene (PM) aufweist, die orthogonal zur Querachse (AT) verläuft und eine erste laterale Seite und eine zweite laterale Seite, die einander gegenüberliegen, begrenzt, wobei die Mittelebene (PM) eine Längsachse (AL) enthält, die durch das Vorderrad (5) und durch das Hinterrad (3) verläuft und parallel zu einer Vorwärtsrichtung des Rollers (1; 1') verläuft, wenn dieser sich in gerader Linie bewegt, und das Hinterrad (3) eine erste laterale Fläche (31) auf der ersten lateralen Seite und eine zweite laterale Fläche (32), die der ersten lateralen Fläche (31) gegenüberliegt, auf der zweiten lateralen Seite aufweist,
und wobei der erste Teil (21; 21') und der zweite Teil (22; 22') des Rahmens (2; 2') durch ein Schwenkgelenk (7; 7') um eine Klappachse (AP; AP') miteinander verbunden sind, die eine Beweglichkeit des einen gegenüber dem anderen zwischen Folgendem ermöglicht:
- einer aufgeklappten Konfiguration, bei der die Lenksäule (4) in Bezug auf das Trittbrett (20; 20') zur Verwendung während einer Fahrt nach oben vorsteht, wobei sich die Lenksäule (4) in der Mittelebene (PM) erstreckt; und
- einer zusammengeklappten Konfiguration, bei der die Lenksäule (4) entlang des Trittbretts (20; 20') heruntergeklappt ist;
wobei das Schwenkgelenk (7; 7') für eine Beweglichkeit der Lenksäule (4) aus der aufgeklappten Konfiguration in die zusammengeklappte Konfiguration angeordnet ist, in der die Lenksäule (4) auf der ersten lateralen Seite in Bezug auf die Mittelebene (PM) heruntergeklappt ist und sich in einem Abstand von der Mittelebene (PM), mindestens teilweise unterhalb des Trittbretts (20; 20'), entlang eines ersten seitlichen Flansches (201; 201') des Trittbretts (20; 20') erstreckt, der sich auf der ersten lateralen Seite und gegenüber der ersten lateralen Fläche (31) des Hinterrads (3) befindet;
wobei der Roller (1) **dadurch gekennzeichnet ist, dass** die Klappachse (AP; AP') auf der ersten lateralen Seite in Bezug auf die Mittelebene (PM) versetzt ist und sie sich im Verhältnis zur Längsachse (AL) in einem Neigungswinkel (IP; IP'), der zwischen 20 und 60 Grad, insbesondere zwischen 30 und 50 Grad, beträgt, geneigt erstreckt.

2. Roller (1; 1') nach Anspruch 1, wobei sich die Klappachse (AP; AP') parallel zur Mittelebene (PM) erstreckt.

3. Roller (1; 1') nach einem der vorhergehenden Ansprüche, wobei:
- in der aufgeklappten Konfiguration die Lenkachse (AD) vertikal oder im Verhältnis zur Vertikalen um einen Winkel, der zwischen 0 und 20 Grad beträgt, geneigt ist; und
- in der zusammengeklappten Konfiguration die Lenkachse (AD) horizontal oder im Verhältnis zur Horizontalen um einen Winkel, der zwischen 0 und 20 Grad beträgt, geneigt ist.

4. Roller (1; 1') nach einem der vorhergehenden Ansprüche, wobei in der zusammengeklappten Konfiguration die Lenkachse (AD) um mehr oder weniger als 5 Grad parallel zur Längsachse (AL) verläuft.

5. Roller (1; 1') nach einem der vorhergehenden Ansprüche, wobei das Schwenkgelenk (7; 7') die Form eines Scharniers aufweist, das mit einer ersten Scharnierhälfte (71; 71'), die fest mit einem oberen Segment des ersten Teils (21; 21') des Rahmens (2; 2') verbunden ist, und mit einer zweiten Scharnierhälfte (72; 72') ausgestattet ist, die fest mit einem unteren Segment des zweiten Teils (22) des Rahmens (2) verbunden ist, wobei die erste Scharnierhälfte (71; 71') und die zweite Scharnierhälfte (72; 72') im Verhältnis zueinander mittels eines Drehzapfens (73; 73'), der die Klappachse (AP; AP') definiert, angelenkt sind, so dass das Schwenkgelenk (7; 7') schwenkbar beweglich ist zwischen:
- einer geschlossenen Position, die der aufgeklappten Konfiguration des Rollers (1; 1') entspricht, wobei das obere Segment des ersten Teils (21) des Rahmens (2) und das untere Segment des zweiten Teils des Rahmens (2) entlang einer sekundären Achse (AS; AS`), die in der Mittelebene (PM) enthalten ist, ausgerichtet sind; und
- einer offenen Position, die der zusammengeklappten Konfiguration des Rollers (1; 1') entspricht, wobei das obere Segment des ersten Teils (21; 21') des Rahmens (2; 2') und das untere Segment des zweiten Teils (22; 22') des Rahmens (2; 2') falsch ausgerichtet sind und nach dem Schwenken um die Klappachse (AP; AP') nebeneinander angeordnet sind.

6. Roller (1; 1') nach Anspruch 5, wobei die sekundäre Achse (AS; AS`) in Bezug auf die Längsachse (AL) um einen sekundären Winkel (IS), der zwischen 45 und 90 Grad und insbesondere zwischen 50 und 80 Grad beträgt, geneigt ist.

7. Roller (1; 1') nach einem der Ansprüche 5 und 6, wobei die Klappachse (AP; AP') in Bezug auf die sekundäre Achse (AS; AS') um einen Zwischenwinkel (IT; IT'), der zwischen 90 und 120 Grad beträgt, geneigt ist.

8. Roller (1; 1') nach einem der Ansprüche 5 bis 7, wobei der erste Teil (21; 21') zwei aufeinanderfolgende rohrförmige Abschnitte aufweist:
- einen Mittelabschnitt (210; 210'), an dem das Trittbrett (20; 20') fixiert ist und der sich entlang der Längsachse (AL) erstreckt; und
- einen geneigten Abschnitt (211; 211`), der vom Mittelabschnitt (210, 210') vorsteht und sich entlang der sekundären Achse (AS; AS`) erstreckt.

9. Roller (1') nach Anspruch 8, wobei der erste Teil (21') ferner Folgendes umfasst:
- einen vorderen Abschnitt (213`), der an einem vorderen Ende des Mittelabschnitts (210') vorne und im Abstand von einer Verbindungsstelle zwischen dem geneigten Abschnitt (211') und dem Mittelabschnitt (210') fixiert ist, und
- einen Verstärkungsabschnitt (214`), der sich zwischen dem vorderen Abschnitt (213') und dem oberen Segment des ersten Teils (21') erstreckt, wobei sich der Verstärkungsabschnitt (214') zwischen der sekundären Achse (AS') und der Längsachse (AL) erstreckt, um eine Verstärkungsstruktur mit einer umgekehrt dreieckigen Geometrie zu bilden.

10. Roller (1; 1') nach einem der Ansprüche 5 bis 9, wobei das Schwenkgelenk (7; 7') einen Verriegelungsmechanismus (74; 74') integriert, der dazu geeignet ist, das Schwenkgelenk (7; 7') in der geschlossenen Position zu verriegeln.

11. Roller (1; 1') nach Anspruch 10, wobei der Verriegelungsmechanismus (74; 74') Folgendes umfasst:
- ein bewegliches Verriegelungselement (75; 75'), das an einem von der ersten Scharnierhälfte (71; 71') und der zweiten Scharnierhälfte (72; 72') befestigt ist;
- ein komplementäres Verriegelungselement (76; 762'), das an der anderen von der ersten Scharnierhälfte (71; 71') und der zweiten Scharnierhälfte (72; 72') befestigt ist, wobei das bewegliche Verriegelungselement (75; 75') und das komplementäre Verriegelungselement (76; 762') dazu ausgelegt sind, in einer Verriegelungsposition zum Verriegeln des Schwenkgelenks (7) in der geschlossenen Position aus einer Entriegelungsposition, in der das bewegliche Verriegelungselement (75; 75') und das statische Verriegelungselement (76; 762') nicht zusammenwirken, zusammenzuwirken, um eine Beweglichkeit in Richtung der offenen Position zu ermöglichen; und
- einen manuellen Aktuator (78; 78'), der dazu ausgebildet ist, auf das bewegliche Verriegelungselement (75; 75') einzuwirken, um das bewegliche Verriegelungselement (75; 75') in die Verriegelungsposition zu bringen und dort zu blockieren.

12. Roller (1; 1') nach einem der vorhergehenden Ansprüche, wobei die Lenksäule (4) ein oberes Ende (43) aufweist, das fest mit einer Lenkstange (44) verbunden ist, die sich quer erstreckt und mit zwei Handgriffen (45) rechts bzw. links versehen ist, und das Hinterrad (3) und die beiden Handgriffe (45) in der zusammengeklappten Konfiguration jeweils drei Auflagepunkte (35, 47, 48) aufweisen, die sich in derselben Ebene erstrecken und eine aufrechte Lagerung des Rollers (1; 1') auf diesen drei Auflagepunkten (35, 47, 48) ermöglichen, die auf einer horizontalen Ebene ruhen.

13. Roller (1; 1') nach Anspruch 12, wobei in der zusammengeklappten Konfiguration die Lenkstange (44) in einer Richtung in Bezug auf eine Basisebene (PB) geneigt ist, die orthogonal zur Querachse (AT) verläuft, und das Vorderrad (5) in einer entgegengesetzten Richtung in Bezug auf dieselbe Basisebene (PB) geneigt ist.

14. Roller (1; 1') nach einem der vorhergehenden Ansprüche, wobei das Hinterrad (3) von einer hinteren Querwelle getragen wird, die sich entlang der Querachse (AT) erstreckt, und die hintere Querwelle von einer hinteren Struktur (10) getragen wird, die am Rahmen (2; 2') fixiert ist und sich seitlich auf der zweiten lateralen Seite in Bezug auf die Mittelebene (PM) erstreckt und somit der zweiten lateralen Fläche (32) des Hinterrads (3) zugewandt ist, so dass die hintere Querwelle aus der hinteren Struktur (10) herausragt, um das Hinterrad (3) freitragend zu tragen, und dass die erste laterale Fläche (31) des Hinterrads (3) frei ist.

## Claims

1. A scooter (1; 1') of the foldable scooter type, comprising a frame (2; 2') and a steering column (4) equipped with a front wheel (5) and pivotally mounted on said frame (2; 2') about a steering axis (AD), the frame (2; 2') comprising, on the one hand, a first portion (21; 21') supporting a rear wheel (3) rotating about a transverse axis (AT) and a footboard (20; 20') and, on the other hand, a second portion (22; 22') pivotally supporting the steering column (4), wherein the scooter (1; 1') has a midplane (PM) orthogonal to the transverse axis (AT) and delimiting a first lateral side and a second lateral side opposite to one another, said midplane (PM) including a longitudinal axis (AL) passing through the front wheel (5) and through the rear wheel (3) and parallel to a direction of advance of the scooter (1; 1') when the latter progresses in a straight line, and the rear wheel (3) has a first lateral face (31) on said first lateral side and a second lateral face (32), opposite to the first lateral face (31), on said second lateral side,
and wherein the first portion (21; 21') and the second portion (22; 22') of the frame (2; 2') are linked to one another by a swivel joint (7; 7') about a folding axis (AP; AP') enabling relative movability thereof between:
- an unfolded configuration wherein the steering column (4) projects upwards with respect to the footboard (20; 20') for use during a displacement, said steering column (4) extending in the midplane (PM); and
- a folded configuration wherein the steering column (4) is folded down along the footboard (20; 20');
wherein the swivel joint (7; 7') is arranged for movability of the steering column (4) from the unfolded configuration into the folded configuration wherein the steering column (4) is folded down on the first lateral side with respect to the midplane (PM) and extends at distance from said midplane (PM), at least partially beneath the footboard (20; 20'), along a first lateral flange (201; 201') of the footboard (20; 20') located on said first lateral side and facing the first lateral face (31) of the rear wheel (3);
said scooter (1) being **characterized in that** the folding axis (AP; AP') is offset on the first lateral side with respect to the midplane (PM) and it extends in an inclined manner with respect to the longitudinal axis (AL) with an angle of inclination (IP; IP') comprised between 20 and 60 degrees, in particular between 30 and 50 degrees.

2. The scooter (1; 1') according to claim 1, wherein the folding axis (AP; AP') extends parallel to the midplane (PM).

3. The scooter (1; 1') according to any one of the preceding claims, wherein:
- in the unfolded configuration, the steering axis (AD) is vertical or inclined with respect to the vertical by an angle comprised between 0 and 20 degrees; and
- in the folded configuration, the steering axis (AD) is horizontal or inclined with respect to the horizontal by an angle comprised between 0 and 20 degrees.

4. The scooter (1; 1') according to any one of the preceding claims, wherein, in the folded configuration, the steering axis (AD) is parallel, within 5 degrees, to the longitudinal axis (AL).

5. The scooter (1; 1') according to any one of the preceding claims, wherein the swivel joint (7; 7') is in the form of a hinge provided with a first hinge knuckle (71; 71') secured to an upper segment of the first portion (21; 21') of the frame (2; 2') and with a second hinge knuckle (72; 72') secured to a lower segment of the second portion (22) of the frame (2), where the first hinge knuckle (71; 71') and the second hinge knuckle (72; 72') are hinged relative to one another by means of a pivot (73; 73') defining the folding axis (AP; AP'), so that said swivel joint (7; 7') is pivotally movable between:
- a closed position corresponding to the unfolded configuration of the scooter (1; 1'), wherein the upper segment of the first portion (21) of the frame (2) and the lower segment of the second portion of the frame (2) are in alignment along a secondary axis (AS; AS') contained in the midplane (PM); and
- an open position corresponding to the folded configuration of the scooter (1; 1'), wherein the upper segment of the first portion (21; 21') of the frame (2; 2') and the lower segment of the second portion (22; 22') of the frame (2; 2') are misaligned and are disposed side-by-side following pivoting about the folding axis (AP; AP').

6. The scooter (1; 1') according to claim 5, wherein the secondary axis (AS; AS') is inclined with respect to the longitudinal axis (AL) by a secondary angle (IS) comprised between 45 and 90 degrees, and in particular between 50 and 80 degrees.

7. The scooter (1; 1') according to any one of claims 5 and 6, wherein the folding axis (AP; AP') is inclined with respect to the secondary axis (AS; AS') by an intermediate angle (IT; IT') which is comprised between 90 and 120 degrees.

8. The scooter (1; 1') according to any one of claims 5 to 7, wherein the first portion (21; 21') has two successive tubular sections:
- a central section (210; 210') on which the footboard (20; 20') is fastened and which extends along the longitudinal axis (AL); and
- an inclined section (211; 211') which projects from the central section (210; 210') and which extends along the secondary axis (AS; AS').

9. The scooter (1) according to claim 8, wherein the first portion (21') further comprises:
- a front section (213') fastened on a front end of the central section (210'), at the front and at distance from a junction between the inclined section (211') and the central section (210'), and
- a reinforcing section (214') extending between the front section (213') and the upper segment of the first portion (21'), said reinforcing section (214') extending between the secondary axis (AS') and the longitudinal axis (AL) to form a reinforcing structure with an inverted triangular geometry.

10. The scooter (1; 1') according to any one of claims 5 to 9, wherein the swivel joint (7; 7') integrates a locking mechanism (74; 74') adapted to lock the swivel joint (7; 7') in the closed position.

11. The scooter (1; 1') according to claim 10, wherein the locking mechanism (74; 74') comprises:
- a movable locking element (75; 75') attached to one amongst the first hinge knuckle (71; 71') and the second hinge knuckle (72; 72');
- a complementary locking element (76; 762') attached to the other one amongst the first hinge knuckle (71; 71') and the second hinge knuckle (72; 72'), said movable locking element (75; 75') and said complementary locking element (76; 762') being adapted to cooperate together in a locking position to lock the swivel joint (7) in the closed position, from an unlocking position wherein said movable locking element (75; 75') and said static locking element (76; 762') do not cooperate together so as to enable movability towards the open position; and
- a manual actuator (78; 78') shaped so as to act on said movable locking element (75; 75') to bring and block said movable locking element (75; 75') in the locking position.

12. The scooter (1; 1') according to any one of the preceding claims, wherein the steering column (4) has an upper end (43) secured to a handlebar (44) extending transversely and provided with two grips (45) respectively to the right and to the left and, in the folded configuration, the rear wheel (3) and the two grips (45) gave respectively three bearing points (35, 47, 48) extending in the same plane enabling an upright bearing of the scooter (1; 1') on these three bearing points (35, 47, 48) resting on a horizontal plane.

13. The scooter (1; 1') according to claim 12, wherein, in the folded configuration, the handlebar (44) is inclined in a direction with respect to a base plane (PB) that is orthogonal to the transverse axis (AT), and the front wheel (5) is inclined in an opposite direction with respect to this same base plane (PB).

14. The scooter (1; 1') according to any one of the preceding claims, wherein the rear wheel (3) is carried by a rear transverse shaft extending along the transverse axis (AT), and said rear transverse shaft is supported by a rear structure (10) fastened to the frame (2; 2') and extending laterally on the second lateral side with respect to the midplane (PM), and thus facing the second lateral face (32) of the rear wheel (3), so that the rear transverse shaft protrudes from the rear structure (10) to support the rear wheel (3) in a cantilevered manner, and that the first lateral face (31) of the rear wheel (3) is cleared.
